# EUROPÄISCHE PATENTSCHRIFT

(11) **EP 2 101 880 B1**
(45) Veröffentlichungstag und Bekanntmachung des Hinweises auf die Patenterteilung: **22.12.2010**
(21) Anmeldenummer: 07815149.5
(22) Anmeldetag: 16.10.2007
(51) Int. Cl.: A62C 3/06

(54) **KUGELFÖRMIGER FULLKÖRPER**
SPHERICAL FILLING BODY
CORPS DE REMPLISSAGE SOUS FORME DE BOULE

(30) Priorität: 21.11.2006 AT 19162006; 04.12.2006 AT 20072006; 03.07.2007 AT 10232007
(43) Veröffentlichungstag der Anmeldung: 23.09.2009
(73) Patentinhaber: Stelzl, Thomas Kurt, 1060 Wien (AT)
(72) Erfinder: Stelzl, Thomas Kurt, 1060 Wien (AT)
(74) Vertreter: Sonn & Partner Patentanwälte
(86) Internationale Anmeldenummer: PCT/AT2007/000482
(87) Internationale Veröffentlichungsnummer: WO 2008/061262

(56) Entgegenhaltungen:
- GB-A- 752 346
- US-A- 3 536 260
- US-A1- 2001 013 366
- US-A1- 2004 063 801
- US-A1- 2004 134 916

## Beschreibung

Die Erfindung bezieht sich auf einen Artikel in Form von kugelförmigen hohlen Füllkörpern zum Ausfüllen von Behältern für brennbare und entzündliche Flüssigkeiten oder Gase, sowie Verfahren zu dessen besonders vorteilhafte Verwendungen wie beispielsweise zur Verhinderung explosionsartiger Verbrennungsvorgänge und Explosionen, zum Löschen von Bränden, als Korrosionsschutz in Tankbehältern, zur Trennung von Treibstoffen und Wasser, als Schutz vor Bakterien und Pilzen in Treibstofftanks, als Diebstahlschutz, zur Reduktion von Kohlenwasserstoffemissionen, zur Erhöhung der Stabilität und Crash-Sicherheit von Tankbehältern, zur Verminderung des "Boil-Off-Effektes" von Wasserstoff, für Anwendungen in der chemischen Industrie, zur Ableitung von statischer Elektrizität aus Treibstoffbehältern, zum Schutz vor elektromagnetischen Störungen, zur Verminderung und Verzögerung des B.L.E.V.E. - Effektes, zur Erhöhung der Befüllmenge von Gasbehältnissen, zum Beheizen und Kühlen von Flüssigkeiten und Gasen, sowie zur Reduzierung des Verdunstungsverlustes. Ferner betrifft die Erfindung Verfahren zur Herstellung des Artikels.

### HINTERGRUND DER ERFINDUNG

Insbesondere zur Verringerung der Explosionsgefahr bei Treibstofftanks und/oder Gastanks (Flüssiggas-Behältern) ist es bekannt geworden, ein mit Schnitten versehenes metallisches Streckmetall zu verwenden, wobei es im wesentlichen derart zur Anwendung gelangt, dass es in Form von Rollen, bzw. Ballen in den Tanks oder Behältern eingebracht wird, dort eine wesentliche Oberflächenvergrösserung bewirkt, jedoch nur einen kleinen Anteil des Tankvolumens einnimmt. Als Material wurde hier ursprünglich Aluminium, bzw. eine Aluminiumlegierung verwendet, da dieses Material besonders weich und deshalb besonders vorteilhaft mittels der bekannten Verfahren, bei denen die Schnitte mittels Messerwalzen angebracht wurden, verarbeitet werden konnte, da naturgemäss die Härte der Messerwalzen die Materialwahl einschränkt. Dieses Basisprinzip der Verarbeitung mit Messerwalzen wurde im Laufe der letzten Jahrzehnte immer wieder verändert, wobei sich die wesentlichen Veränderungen primär auf die Optimierung von einzelnen Komponenten der Maschinen, insbesondere der Streckmechanismen, bezogen haben (vgl. EP 340 619 B, DE 2801 312 C2, DE 3814448 A1).

Die Praxis hat jedoch gezeigt, dass sich beim Schneiden mit Messerwalzen Spanabfälle und Abtriebteilchen ergeben, die bei den diesen Patenten zugrunde liegenden Anwendungen erheblich nachteilig sind. Vor allem im Fall der Verwendung des Streckmateriales als Explosionsschutzmaterial in Treibstoff-Tanks gelangen diese Partikel in den Treibstoff und mit diesen in Filteranlagen von Brennkraftmaschinen oder in die Maschinen selbst, wo sie Schäden verursachen. Um hier Abhilfe zu schaffen, wurde in der EP 912 267 B bereits vorgeschlagen, die Schnitte in den Materialbahnen ohne Messerwalzen mit Hilfe von Laser-, Wasser- oder Elektronenstrahlen abgebenden Schneideinheiten anzubringen, wobei mehrere solche Schneideinheiten quer zur Laufrichtung der Folienbahn nebeneinander fest angeordnet werden, so dass in der darunter vorbeibewegten Bahn intermittierende Längsschnitte nebeneinander angebracht werden, und zwar entsprechend so viele Längslinien nebeneinander, als Schneideinheiten vorgesehen werden. Der Vorteil dieser Technik ist, dass dabei keine Späne oder dgl. Partikel beim Schneiden anfallen und es sind auch keine Schmiermittel wie im Fall von Messerwalzen erforderlich, sodass saubere Streckmaterialien - erstmals auch aus Materialien mit einer höheren Oberflächenhärte wie beispielsweise Edelstahl - erhalten werden können. Das solcherart mit Längsschnitten versehene Material wird danach gestreckt, wobei von gravierendem Nachteil ist, dass das Strecken der mit Längsschnitten versehenen Materialbahn durch Auseinanderziehen der Bahn in Breitenrichtung erfolgen muss, wobei eine Verbreiterung der Bahn sowie gleichzeitig eine Verkürzung der Bahn in Laufrichtung herbeigeführt wird. Das Auseinanderziehen quer zur Längsrichtung der Bahn ist jedoch nur mit relativ komplexen randseitigen Greifeinrichtungen für die Bahn zu bewerkstelligen, wobei eigene Förderketten oder Zahnriemenstrecken erforderlich sind, wie diese auch in der genannten EP 912 267 B dargelegt sind.

Um diese und andere Nachteile auszuschliessen, wurde mit der Patentanmeldung PCT/AT2005/000392 (WO 2006/034522 A1) erfindungsgemäss vorgeschlagen, dass die Schnitte in der Materialbahn, insbesondere in folienartigen Metallbahnen, die bevorzugt aus Edelstahl bestehen, als Querschnitte angebracht werden, wobei ein Schneidstrahl längs einer Querlinie relativ zur Materialbahn bewegt und dabei ein- und ausgeschaltet wird, so dass die voneinander beabstandeten, d.h. voneinander durch Material getrennten, Querschnitte gebildet werden, um so nach dem Strecken die gewünschte Netzkonfiguration zu erzielen. Ein ähnliches Verfahren ist auch aus dem Patent US 2001/001986 A1 bekannt.

All diesen Verfahren ist gemeinsam, dass das damit erzeugte Streckmetall in Ballenform in die zu schützenden Behälter eingebaut wird. Nachteilig bei der Verwendung von ballenartigen Streckmetallen als Explosionsschutz ist, dass die Behälter mit einem Block aus Streckmetall ausgefüllt sind, dessen Ausmasse den inneren Abmessungen des Behälters entsprechen und der demgemäss nicht oder nur schwierig unter Zerstörung des Blockes aus dem Behälter entfernt werden kann. Eine Entfernung der Füllung aus Streckmetall aus dem Behälter kann beispielsweise wegen einer gewünschten Reinigung oder Kontrolle der Behälterinnenwände notwendig sein. Darüberhinaus ist der wesentliche Nachteil dieser Technologie, dass die Behälter nicht über kleine Öffnungen (beispielsweise Tankeinfüllstutzen) im nachhinein befüllt werden können. Es wurde daher immer wieder vorgeschlagen, kleine Füllkörper aus dem Streckmetall herzustellen und diese durch Behälteröffnungen im nachhinein in das Behälterinnere einzubringen. So ist beispielsweise aus der GB-PS 20 28 129 bekannt geworden, Quadrate, Rechtecke, Zylinder oder Kugeln aus Streckmetall derart zu verwenden. Im wesentlichen gleichen sich die Verfahren zur Herstellung derartiger Kugeln insoferne, dass das Ausgangsmaterial für die Herstellung stets ein bereits produziertes Streckmetall ist, aus dem auf verschiedenen Wegen kugelartige oder ellipsenartige Körper geformt werden (vgl. dazu: DE 381 6792 C2, EP 0 486 464 A1, EP 0558 163 B1, AT 389 479 B, WO/1993/008361)).

In der Praxis hat sich jedoch gezeigt, dass sämtliche dieser Herstellverfahren nicht in der Lage sind, ein einwandfreies Ergebnis zu liefern, da die solcherart stets aus Streckmetall hergestellten Füllkörper keine Kugeln, sondern bestensfalls kugelartige Stauchkörper sind, deren Neigung zum gegenseitigen Verklemmen durch Verhaken der hochgebogenen oder gepressten Lückenränder der Streckmetalle zumindestens nicht zur Gänze mit der erforderlichen Sicherheit auszuschliessen ist. Durch die bisher bekannten Produktionsverfahren sind die hergestellten kugelförmigen Stauchkörper aussen rauh und nicht glatt. Die Kugeln rollen daher nicht zuverlässig aufeinander ab und es ist daher niemals sicher, ob die Kugeln den zu schützenden Behälter bis in den letzten Bereich verlässlich ausfüllen. Es können sich feste Brücken im Inneren der Tanks bilden, welche Hohlräume ermöglichen. Hier ist eine wesentliche Gefahr begründet, da es für einen funktionierenden Explosionsschutz funktionswichtig ist, dass keine Hohlräume im Tankinneren verbleiben. Weiters neigen insbesondere Füllkörper aus Aluminium zu einem gegenseitigen starken Abrieb durch den scheuernden Kontakt zueinander wenn sie in einem Behälter eingebracht sind. Darüberhinaus hat sich gezeigt, dass diese kugelförmigen Stauchkörper aus gepresstem und geformten Streckmetall keinesfalls dauerhaft die erforderliche Formstabilität oder Festigkeit gegenüber Gas- oder Flüssigkeitsdruckspitzen aufweisen, so dass bei damit ausgefüllten Benzintanks nach längerer Verwendungsdauer ein Setzen der Kugeln eintritt - das sogenannte "Nesting" - und der Tank damit nicht mehr in der für einen Explosionsschutz notwendigen Menge vollständig ausgefüllt bleibt. Auch sind diese Füllkörper derart instabil, dass ein Befüllen mit einem Einblasgerät in den Tank und insbesondere ein Absaugen der Füllkörper aus dem Tank Schäden und Verformungen an den Füllkörpern hinterlassen kann. Um ein besseres Befüllen mit derartigen Füllkörpern aus Streckmetall zu ermöglichen, ist es bekannt geworden, diese Füllkörper mit einer flüssigkeitslöslichen Folie zu umgeben, die den Füllkörper während des Einfüllvorganges umschliesst und sich danach innerhalb einiger Zeit rückstandsfrei nach Kontakt mit der Treibstoffflüssigkeit (beispielsweise Benzin) auflöst, sodass nur mehr die Füllkörper alleine im Behälterinneren verbleiben. Der wesentliche Nachteil von Füllkörpern aus Streckmetall ist jedoch generell, dass sie eben verfahrensbedingt daraus entstehen, dass Streckmetall gestaucht und geformt wird und bei diesem Herstellungsprinzip keine exakte verbindliche rechnerische Definition der geometrischen Eigenschaften (exakte Verdrängung, Volumen etc.) der produzierten Füllkörper möglich ist. Aus der Praxis ist es jedoch bekannt, dass dies das wesentliche Hauptkriterium für die Anwendung durch potentielle Grosskunden eines derartigen Explosionsschutzes ist. Ein Hersteller von Flugzeugen muss beispielsweise auf Gramm genau das Gewicht des zu verbauenden Explosionsschutzes und die exakte Volumensverdrängung kennen. Er muss sicher sein können, dass die eingefüllten Füllkörper wieder aus den befüllten Tank abgesaugt und mit den gleichen Eigenschaften wieder eingefüllt werden können. Darüberhinaus ist jegliche Korrissionsgefahr oder Abrieb verlässlich zu vermeiden.

In diesen Unsicherheitsfaktoren für den Anwender und Kunden ist auch der Umstand begründet, dass - obwohl die Idee seit nunmehr drei Jahrzehnten am Markt ist - sich bis heute eine breite Marktpenetration der benannten Füllkörper aus Streckmetall weltweit nicht ergeben hat. Als gravierender Nachteil der nach den erwähnten Verfahren hergestellten Füllkörper aus Streckmetall ist auch insbesondere der Umstand zu benennen, dass diese Füllkörper hinsichtlich Ihrer Fähigkeit mit Flüssigkeiten oder Gasen durchströmt zu werden erheblich nachteilig sind und tatsächlich einen nicht unwesentlichen Strömungswiderstand aufweisen. Generell ist ein wesentlicher Nachteil darüberhinaus des gesamten Verfahrens, bei dem Streckmetall in Form von netzwerkartigen Ballen und Füllkörpern aus diesen Netzen eingesetzt wird, dass dieses angewandte physikalische Prinzip der Oberflächenvergrösserung, bzw. Flammenkühlung, nur dazu geeignet ist, eine Explosion zu verhindern, nicht jedoch einen Brand zu verhindern oder einen solchen zu löschen. Es ist nun Aufgabe der vorliegenden Erfindung einen Füllkörper zu schaffen, der wesentlich effektiver ist als bekannte Produkte, nicht nur in der Verhinderung von Explosionen in Treibstofftanks, sondern auch beim Löschen von Oberflächenfeuern, sowie auch bei der Erfüllung einer Reihe von anderen in weiterer Folge angeführten Bedarfsfälle, deren Gegenstände und Vorteile in der weiteren Beschreibung deutlich werden. Zur Lösung dieser Aufgabe sieht die vorliegende Erfindung die Ausgestaltung eines neuartigen kugelförmigen hohlen Füllkörpers selbst, wie im beiliegenden unabhängigen Ansprüchen definiert, vor. Vorteilhafte Anwendungsverfahren sind in den abhängigen Anspruch angegeben. Die Erfindung zielt darauf ab, Verfahren der eingangs beschriebenen Art anzugeben, welche die Herstellung von exakt definierten und vollkommen gleichartigen Füllkörpern mit idealen Eigenschaften aus dem jeweils für den spezifischen Einsatzzweck optimal geeigneten Material ermöglichen, die die genannten Nachteile der bisher verwendeten Füllkörper aus Streckmetall nicht aufweisen.

### DETAILLIERTE BESCHREIBUNG DER ERFINDUNG

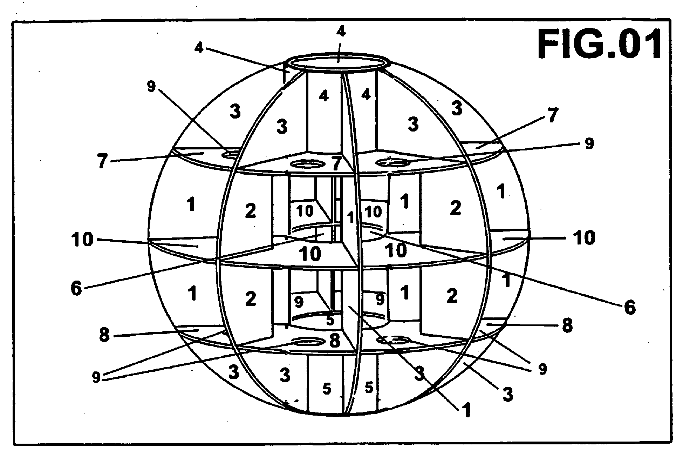

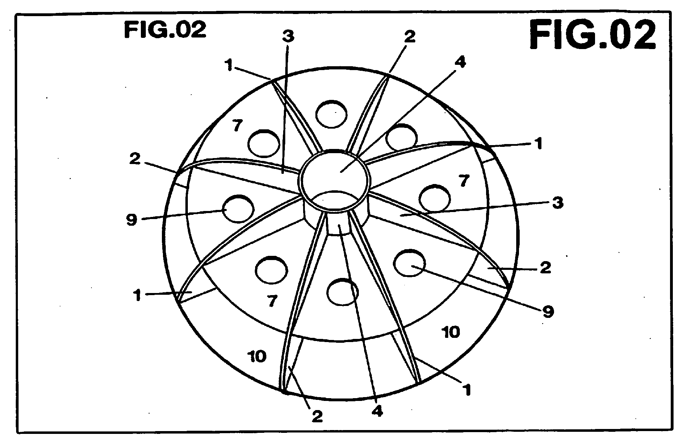

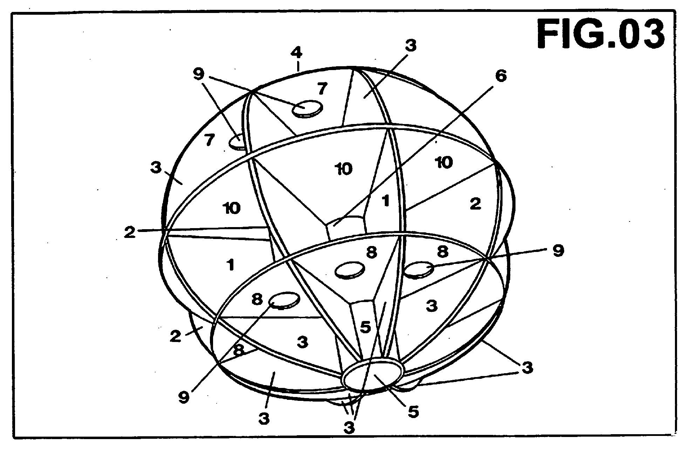

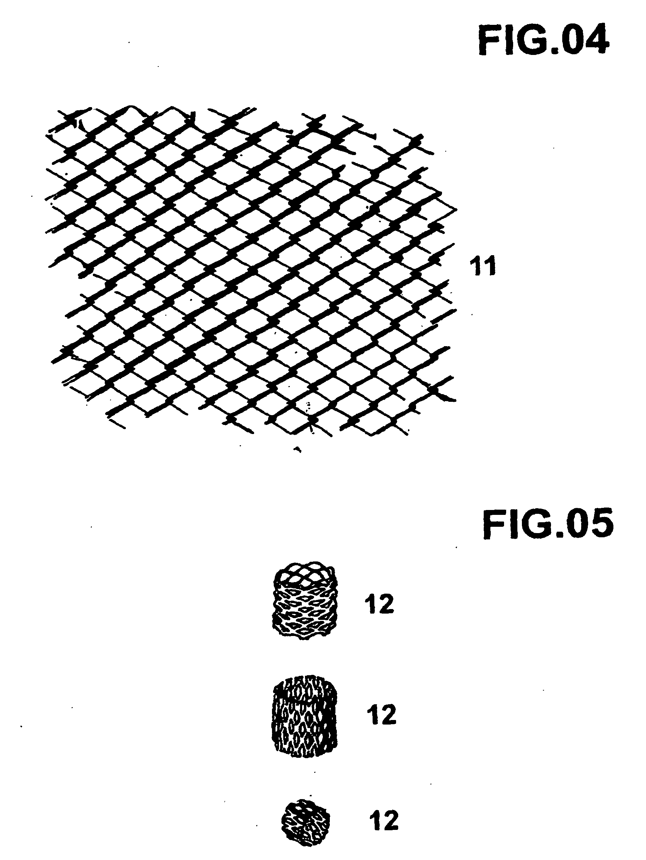

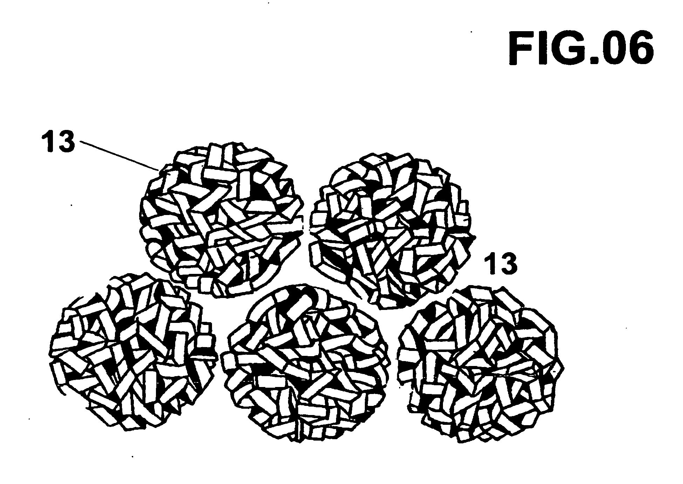

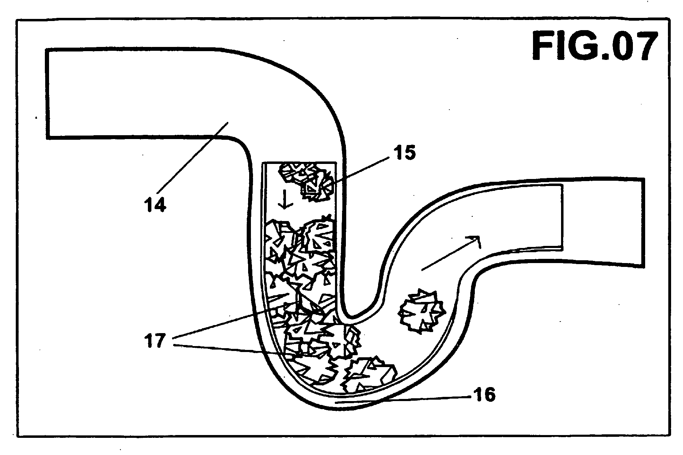

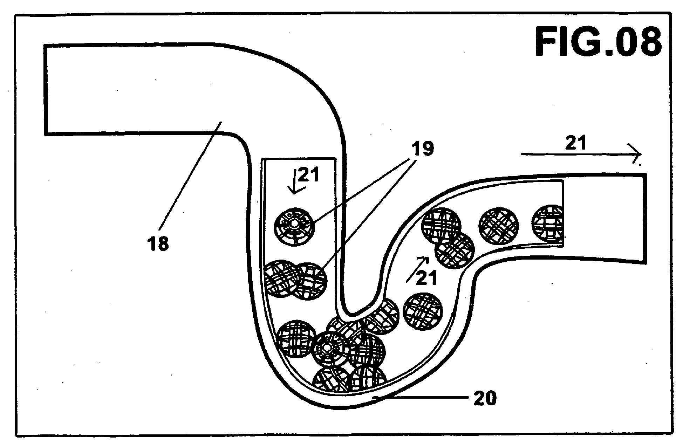

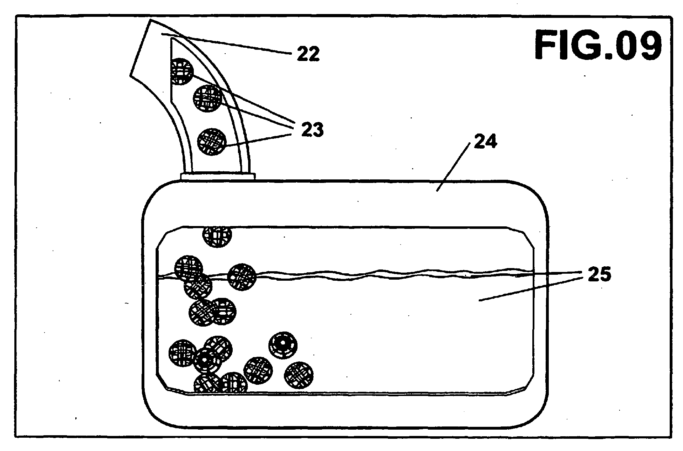

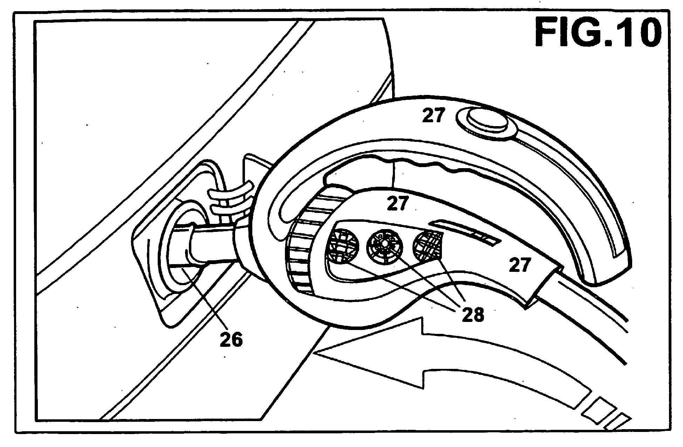

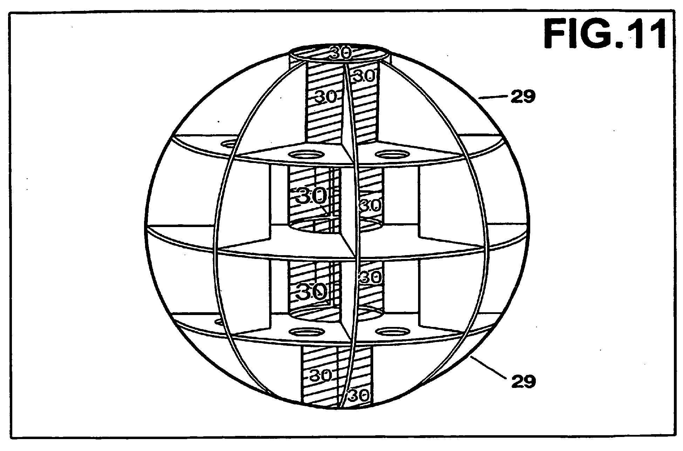

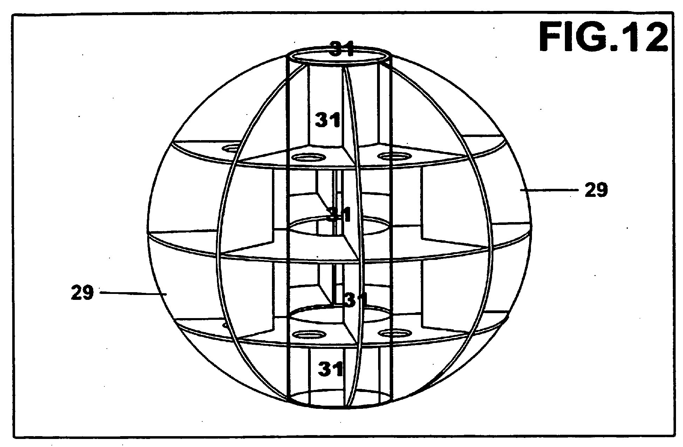

Die Aufgabe ist durch den in den Ansprüchen angegebenen Füllkörper gelöst Ein Vorteil des beschriebenen Füllkörpers ist, dass er die, für die Verfahren in den Ansprüchen ideale kugelförmige Form mit einer absolut glatten Oberfläche darstellt, die beschriebenen Füllkörper perfekt aufeinander abrollen und einen Behälter mit grösster Zuverlässigkeit bis in den letzten Bereich ausfüllen. Eine Brückenbildung durch gegenseitiges Verhaken der beschriebenen Füllkörper tritt defintiv nicht ein. Durch die in den Ansprüchen definierten Herstellverfahren ist es möglich, die für den jeweiligen Einsatzzweck notwendigen Eigenschaften des beschriebenen Füllkörpers exakt einzustellen und die Gleichartigkeit sämtlicher Füllkörper zu gewährleisten. Ein weiterer Vorteil des beschriebenen Füllkörper ist, dass er über eine geringst mögliche Volumensverdrängung und ein geringst mögliches Gewicht verfügt. Obwohl die Behälter vollständig mit den erfindungsgemäss beschriebenen Füllkörpern gefüllt sein müssen, müssen die beschriebenen Füllkörper einen so hohen Anteil an Hohlräumen aufweisen, dass das Fassungsvermögen für die flüssigen Inhaltsstoffe der Behälter durch das Füllen mit den beschriebenen Füllkörpern so wenig wie möglich reduziert wird, wobei beispielsweise Werte von 1-5 Prozent üblich sind. Um dies zu erreichen, müssen alle beschriebenen Füllkörper die exakt gleiche Grösse, Form, Dichte und das gleiche Gewicht haben. Ein Vorteil des beschriebenen Füllkörpers ist, dass er eine höchstmögliche Leitfähigkeit (Temperatur und Elektrizität) und eine hochfeste Stabilität aufweist. So ist gewährleistet, dass der Volumensverlust in dem mit den beschriebenen Füllkörpern befüllten Behälter nicht mehr als 1 bis 5 % des Volumens ist und die Gewichtszunahme des befüllten Behälters in Relation zu den Vorteilen des beschriebenen Füllkörpers vernachlässigbar ist. Darüberhinaus ist gewährleistet, dass es durch die hohe Stabilität der beschriebenen Füllkörper zu keinem Bruch von Teilen des beschriebenen Füllkörpers unter Last eines Flüssigkeits- oder Gasschwalles (Flüssigkeits- und Gasdruckspitzen), bzw. unter der Last des Gewichtes der aufeinanderliegenden beschriebenen Füllkörper kommt. Ein weiterer Vorteil des beschriebenen Füllkörpers ist, dass er trotz seiner geringen Volumensverdrängung über eine grösstmögliche Oberfläche verfügt. Der beschriebene Füllkörper bildet eine möglichst grosse Oberfläche, hat jedoch andererseits aber einen Aufbau, der einen Druckverlust möglichst gering realisiert. Ein weiterer Vorteil des beschriebenen Füllkörpers ist, dass er strömungstechnisch derart optimiert ist, dass er nur einen geringst möglichen Strömungswiderstand gegenüber Flüssigkeiten oder Gasen aufweist, egal wie der beschriebene Füllkörper innerhalb der gesamten Befüllung eines Behälters, innerhalb dieses Behälters mit den beschriebenen Füllkörpern zu liegen kommt. Ein weiterer Vorteil des beschriebenen Füllkörpers ist, dass ein in dem beschriebenen Füllkörper befindlicher durchgehender Hohlraum ermöglicht, einen Hohlkörper in den beschriebenen Füllkörper problemlos zu integrieren. So wird erfindungsgemäss vorgeschlagen in diesen Hohlkörper eine brandhemmende oder brandlöschende Substanz oder einen elektronischen aktiven oder passiven Transponder einzulagern. Darüberhinaus wird auch erfindungsgemäss vorgeschlagen, den Hohlkörper in dem beschriebenen Füllkörper aus einem feuerfesten schwimmenden Schaummaterial zu fertigen, um solcherart diesen Hohlkörper als Auftriebskörper für den beschriebenen Füllkörper zu nutzen und den beschriebenen Füllkörper damit schwimmfähig zu machen. Durch die offenbarten Eigenschaften des beschriebenen Füllkörpers wie in **Fig.01**, **Fig.02** und **Fig.03** gezeigt, ist es möglich, Nachteile der bisher bekannt gewordenen zylinder- und ellipsenförmigen Füllkörper aus Streckmetall, wie in **Fig. 05** als **12** und kugelförmigen Füllkörper aus Streckmetall in **Fig. 06** als **13**, gezeigt, zu verhindern. Die bisher bekannt gewordenen Füllkörper, die aus dem Streckmetall, in **Fig. 04** als **11** gezeigt, hergestellt wurden, neigen insbesondere beim Einbringen in geometrisch verwinkelten Rohren zum Verhaken. In **Fig. 07** ist ein Rohr **14** gezeigt, in das bisher gebräuchliche Füllkörper aus Streckmetall **15** eingefüllt werden und es in diesem Rohr in der Biegung **16** zu einem Stau der Füllkörper **15** im Bereich **17** kommt. Mit den erfindungsgemäss beschriebenen Füllkörpern wird diese Gefahr verhindert. So zeigt die **Fig. 08** ein Rohr **18** in dem erfindungsgemäss vorgeschlagene Füllkörper 19 in Richtung **21** eingeblasen werden und es an der Rohrbiegung **20** zu keinem Stau der vorgeschlagenen Füllkörper **19** durch gegenseitiges Verhaken kommt, sodass sich die Füllkörper **19** ungehindert in Richtung **21** weiterbewegen. Die besonders vorteilshafte Anwendung der erfindungsgemäss vorgeschlagenen Füllkörper wird insbesondere aus der **Fig. 09** deutlich. Darin werden über ein Einfüllrohr **22** die erfindungsgemäss beschriebenen Füllkörper **23** in einen Tankbehälter **24,** der mit einem Treibstoff **25** befüllt ist, eingebracht. Dieses Einbringen wird durch die besonders vorteilshafte Form und deren Eigenschaften der erfindungsgemäss beschriebenen Füllkörper derart erleichtert, dass wie in **Fig.10** dargestellt, beispielsweise die erfindungsgemäss beschriebenen Füllkörper **28** mittels einem Einblasgerät **27** (hier nur der Einfüllstutzen davon sichtbar) in die vorhandene Tanköffnung **26** eines PKW, problemlos eingefüllt werden können. Ein wesentlicher Bestandteil der erfindungsgemäss vorgeschlagenen Füllkörper ist wie in **Fig.11** gezeigt, der Hohlraum **30** des erfindungsgemäss vorgeschlagenen Füllkörpers **29.** Dieser Hohlraum bietet wie in **Fig. 12** gezeigt, die Möglichkeit einen hohlen oder vollen Körper **31** in den erfindungsgemäss vorgeschlagenen Füllkörper **29** zu integrieren.

Andere Gegenstände und Vorteile werden in der weiteren Beschreibung deutlich.

Es ist bekannt geworden, dass für das Auftreten einer Explosion im Inneren eines Tankbehälters drei wesentliche Elemente vorhanden sein müssen - nämlich Druck, ein zündfähiges Gemisch aus Brennstoffdampf und Sauerstoff, sowie ein Zündimpuls. In vielen Behältern, die flüssige explosionsgefährdete Stoffe enthalten - insbesondere wenn diese nur zum Teil mit der Flüssigkeit voll sind - ist ein Brennstoffdampf-/Sauerstoffgemisch und die Gefahr eines Druckes meistens vorhanden, sodass durch einen zufälligen Zündimpuls oder durch die Überhitzung der Behälterwände, eine Explosion erfolgen kann. Erfindungsgemäss wird daher vorgeschlagen, bestehende Behälter, die flüssige, explosionsgefährdete Stoffe enthalten, wie etwa Treibstofftanks, beim Bau oder im nachhinein vollständig mit den erfindungsgemäss beschriebenen Füllkörpern zu befüllen. Entzündet sich ein solcherart mit den erfindungsgemäss beschriebenen Füllkörpern befüllter Behälter, so kommt es zu keiner Explosion der im Behälterfreiraum angesammelten explosiven Gase, da die erfindungsgemäss beschriebenen Füllkörper für ein normales kontrolliertes Abbrennen der im Behälterfreiraum angesammelten explosiven Gase und eine Kühlung der Flammen sorgen.

Bei einem neuartigen Verfahren einer weiteren Ausführungsform der Erfindung ist es auch von besonderem Vorteil, dass in die beschriebenen Füllkörper ein brandhemmender Wirkstoff in einem Wachsbehälter integriert wird. Diese Integration eines brandhemmendes Wirkstoffes ermöglicht es ein, bis jetzt im Zusammenhang mit explosionsverhinderndem Füllmaterial, nicht lösbares Problem nunmehr einfach und erstmalig zu lösen. Wenn beispielsweise ein mit Treibstoff gefüllter Tankwagen verunfallt und dessen Tank aufreisst und Benzin austritt, so würde zwar ein im Tank eingebautes Streckmetall dafür sorgen, dass der Tankwagen vorerst nicht explodiert, könnte jedoch nicht verhindern, dass beispielsweise ausgetretener Treibstoff sich außerhalb des Fahrzeuges entzündet und danach in Brand gerät. In diesem Falle würde nunmehr der brandhemmende Wirkstoff in den beschriebenen Füllkörpern reagieren und den Brand löschen. Dazu wird beispielsweise ein Löschgel - vorzugsweise auf Polymerbasis - in einen Hohlkörper mit einer Aussenhülle aus Wachs gegeben, welche bei einer bestimmten Temperatur schmilzt und den Inhalt, nämlich das Löschgel auf Polymerbasis, freigibt. Weitere brandhemmende Füllungen können Natriumbicarbonat, Zink- oder Natriumborat, Calciumbromid, Calciumchlorid-Dihydrat, Calciumchlorid-Hexahydrat oder Oleate (Salze und Ester der Ölsäure) sein.

Bei einem neuartigen Verfahren einer weiteren Ausführungsform der Erfindung ist es auch von besonderem Vorteil die erfindungsgemäss beschriebenen Füllkörper mit Alkalibichromat zu beschichten, um Wasser in Brennstoffen zu entfernen. Dabei handelt es sich um das Problem, dass das Vorhandensein von Wasser in Treibstoffen - beispielsweise Diesel im maritimen Bereich - unerwünscht und für den nachgeschaltenen Motor schädlich ist. Stand der Technik ist hier, das Wasser mit Abscheider und Filter abzusondern. Die vorliegende Erfindung ist jedoch einfacher. Als besonders wirkungsvoll ist dabei eine Beschichtung der erfindungsgemäss beschriebenen Füllkörper mit Alkalibichromat anzusehen, da das darin enthaltene Bichromat bewirkt, dass Wasser aus Brennstoffen und deren Behältern entfernt wird.

Bei einem neuartigen Verfahren einer weiteren Ausführungsform der Erfindung ist es auch von besonderen Vorteil, die beschriebenen Füllkörper schwimmfähig zu machen und zu diesem Zwecke bestimmte Kammern innerhalb der beschriebenen Füllkörper zu schaffen, in denen Produkte mit bestimmten Eigenschaften nach Fertigstellung der beschriebenen Füllkörper eingebracht werden können. So ist hier insbesondere an die Einbringung eines Schwimmkörpers (Auftriebskörper) aus einem unbrennbaren Material zu denken. Bei dieser weiteren Ausführungsform der Erfindung bietet die Integration eines Auftriebskörpers als Schwimmkörper aus einem unbrennbaren Material, die Möglichkeit, die beschriebenen Füllkörper nicht nur zum kompletten Befüllen des Treibstoffbehälters zu verwenden, sondern insbesondere Lagertanks - beispielsweise in Raffinerien und bei Flughäfen - und Behälter auch dadurch vor Explosionen zu schützen, dass die Oberfläche der gelagerten explosiven Flüssigkeit zur Gänze mit schwimmenden erfindungsgemäss beschriebenen Füllkörpern ein-oder mehrlagig bedeckt wird. Damit wird eine verlässliche Flamm- und Zündsperre zwischen der Flüssigkeit und dem darüberliegenden Gas-/Luftgemischraum geschaffen. Auch können Brände dadurch gelöscht werden, dass die Kugeln oder kugelförmigen Körper in grosser Zahl auf der brennenden Oberfläche lückenlos ausgebracht werden und damit das Feuer erstickt wird. Dabei basiert die Brandlöschfähigkeit der nach dieser Erfindung hergestellten Kugeln oder kugelförmigen Körper auf dem Phänomen, dass die Flamme an der Oberfläche eines brennenden Materiales nicht durch die beschriebenen Füllkörper durchdringt. Bei einem normalen Feuer bewirkt die Hitze des brennenden Materiales, dass das Material an der Oberfläche verdampft und sich mit dem Sauerstoff in der Atmosphäre über ihm vermischt, um eine brennbare Mischung zu erzeugen. Wenn die beschriebenen Füllkörper nach der vorliegenden Erfindung zwischen der Oberfläche des brennenden Materials und der Atmosphäre angeordnet werden, reduziert die Wärmeleitfähigkeit der beschriebenen Füllkörper die Hitze des Feuers und reduziert so die Menge an erzeugten Dampf. Darüberhinaus verhindern die beschriebenen Füllkörper, dass die Flammen an der Oberfläche des brennenden Materials die brennbare Mischung aus Dampf und Atmosphäre über den Feuer erreichen und wirken somit als Zündsperre. Ebenfalls von besonderem Vorteil im Rahmen einer weiteren Anwendung der vorliegenden Erfindung, ist die Integration von brandhemmenden Füllungen in den beschriebenen Füllkörpern, wie Oleaten oder chemisch ähnlichen Verbindungen, da Oleate im Brandfalle einen dichten Dampf erzeugen, der das brennende Material bedeckt und damit ein schnelleres Ersticken der Flammen unterstützt.

Bei einem neuartigen Verfahren einer weiteren Ausführungsform der Erfindung ist es auch von besonderen Vorteil die beschriebenen Füllkörper in Schächten von Klimaanlagen, Domschächten und Rohrleitungen und Pipelines einzubauen. Dabei verhindern sie die Gefahr eines "Durchzündens" von explosionsgefährdeten Gas-/Luftgemischen in dem sie als permanente luft- und gasdurchlässige Zünd- und Flammsperre wirken. Zu diesem Zwecke können nur Teile der Schächte und Leitungen, oder der gesamte Schacht und die gesamte Leitung mit den beschriebenen Füllkörpern nach der vorliegenden Erfindung befüllt werden.

Bei einem neuartigen Verfahren einer weiteren Ausführungsform der Erfindung ist es auch von besonderen Vorteil eine spezielle Form der beschriebenen Füllkörper - dabei handelt es sich um beschriebene Füllkörper, die ein bei Hitze stark aufschwellendes Material integriert haben - in Schächten von Klimaanlagen, Domschächten, Rohrleitungen und Pipelines einzubauen. Dabei verhindern sie nicht nur die Gefahr eines "Durchzündens" von explosionsgefährdeten Gas-/Luftgemischen in dem sie als permanente luft- und gasdurchlässige Zündsperre wirken, sondern auch die Ausbreitung von - im Brandfalle entstehenden - hoch giftigen Rauchgasen, in dem das in den beschriebenen Füllkörpern integrierte Material durch die Hitzeeinwirkung des Brandes stark aufschwillt und den gesamten zu schützenden Raum luftdicht abdichtet. Zu diesem Zwecke können nur Teile der Schächte und Leitungen, oder der gesamte Schacht und die gesamte Leitung mit den beschriebenen Füllkörpern nach der vorliegenden Erfindung befüllt werden.

Bei einem neuartigen Verfahren einer weiteren Ausführungsform der Erfindung ist auch der Einsatz der beschriebenen Füllkörper in Schächten von Klimaanlagen, die sich beispielsweise in Krankenhäusern befinden, als Bakteriensperre von besonderem Vorteil. Zu diesem Zweck sind die beschriebenen Füllkörper mit einer antibakteriellen und antifungiziden Schicht - beispielsweise aus Edelmetall - zu beschichten. Die derart beschichteten Füllkörper vernichten bei Berührung die in der durchströmenden Luft enthaltenen Bakterien und Viren und steten somit eine effektive Möglichkeit zur Verhinderung der Ausbreitung von sogenannten "Krankenhauskeimen" durch die Klimaanlage eines Spitalgebäudes dar. Durch die besondere Bauart der beschriebenen Füllkörper können diese jederzeit im Falle von Verschmutzungen abgesaugt, gereinigt und im gereinigten Zustand wieder in die Klimaanlage eingebracht werden.

Bei einem neuartigen Verfahren einer weiteren Ausführungsform der Erfindung bietet die Integretation eines aktiven oder passiven Transponders in die nach dieser Erfindung beschriebenen Füllkörper, weitere besondere Vorteile wie folgt: Insbesondere zur Identifikation von Gütern oder Tieren, sowie für kontaktlose Ticketing-Systeme wie etwa wiederaufladbare Fahrkarten für Verkehrsmittel ist die RFID (Radio Frequency Identification) - Technologie bereits im Einsatz. Mit dieser bereits bekannt gewordenen RFID-Technologie können Informationen von gekennzeichneten Objekten schnell und einfach elektronisch ohne physischen Kontakt ausgetauscht werden. Im wesentlichen setzt sich ein RFID-System aus einem Lesegerät - dem sogenannten "Reader"- und einem Antwortsendegerät - dem sogenannten "Transponder" - zusammen. So ist es bereits erfinderisch bekannt geworden, dass ein solcher Transponder aus einem elektronischen Speicher, sowie einer Sende/Empfangsantenne bestehen kann und entweder in einem Papieretikett ("Smart Label") oder in einem festen Gehäuse ("TAG") integriert sein kann. Kernstück des Transponders ist der elektronische Speicher, der als eigentlicher Informationsträger dient. Auf den nur sandkorngrossen Chip lassen sich Daten speichern, mit denen sich etwa jedes einzelne Stück einer Ware und nicht nur die jeweilige Warengruppe wie beim bekannten Barcode (Strichcode) identifizieren lässt. Das Lesen und Schreiben der Informationen auf bzw. von diesen Chips, funktioniert mit Hilfe von Sendefeldern, entweder durch Reflexion von Radiofrequenzsignalen, durch Induktion in magnetischen Feldern, oder Spiegelladung in elektrischen Feldern. Grundsätzlich gibt es zwei Transpondervarianten: aktive Transponder, die mittels Batterie über eigene Energie verfügen - diese erzeugen selbst elektromagnetische Wellen - und passive Transponder - diese werden bei den Schreib- und Lesevorgängen von den Readern mit Energie versorgt. Als Stand der Technik ist bekannt geworden, dass gängige Transponder beispielsweise in Glaszylinder, Plastikscheiben und Scheckkarten integriert werden. Sie werden in oder beispielsweise an Transportbehältern, Gasflaschen, Getränkefässern, Kühl- und Rollcontainer und wiederbefüllbaren Flaschen genauso angebracht, wie an bzw. in lebenden Objekten (beispielsweise Kennzeichnung von Hunden und Katzen). Zu den wesentlichen Wegbereitern der RFID-Technologie gehört die Autoindustrie, die diese Technologie insbesondere zur Produktionssteuerung und - überwachung verwendet. Als neue Möglichkeit für eine vorteilhafte Verwendung der RFID-Technologie wird jedoch zunehmend der Diebstahlschutz für die Sicherung von ein- und mehrspurigen Kraftfahrzeugen wichtig. Dabei wird der Transponder untrennbar mit einem bestimmten Bauteil des einspurigen Fahrzeuges - beispielsweise des Fahrzeugrahmens - und des mehrspurigen Fahrzeuges - beispielsweise der Stossstange - verbunden. In einer zentralen Datenbank, die der Polizei und Werkstätten zugänglich ist, werden gestohlene Kraftfahrzeuge gespeichert. Die Transponder reagieren automatisch auf Lesegeräte der Polizei und der Mitarbeiter der KFZ-Werkstätten, sobald sie in deren Nähe kommen. Nachteilig hat sich dabei jedoch die Tatsache herausgestellt, dass professionelle Diebe zunehmend von diesen Systemen Kenntnis erlangen und bestimmte Bauteile des gestohlenen Fahrzeuges - beispielsweise die Stossstange - austauschen, soferne sie dort einen Transponder lokalisieren und/oder auch nur vermuten. Auch ist die Nachrüstung mit RF-Transpondern wie beschrieben für den laienhaften Konsumenten deshalb schwierig, weil von ihm - beispielsweise aufgeklebte - Transponder (z.B. im Fahrzeugradkasten) besonders leicht von den Tätern entdeckt werden. Es ist nun Aufgabe der vorliegenden Erfindung eine besonders vorteilshafte Unterbringung eines derartigen RF-Transponder vorzuschlagen. Zur Lösung dieser Aufgabe sieht daher die vorliegende Erfindung auch vorteilshaft vor, einen aktiven oder passiven Transponder in die beschriebenen Füllkörper zu integrieren. Wie bereits ausgeführt besteht der Einsatzzweck der nach dieser Erfindung beschriebenen Füllkörper nach Anspruch 1 bis 32 im wesentlichen darin, dass mit ihnen, bestehende Behälter, die beispielsweise flüssige, explosionsgefährdete Stoffe enthalten, wie etwa Treibstofftanks, nachträglich durch eine vorhandene Einfüllöffnung angefüllt werden. Dabei ist es von besonderen Vorteil, dass solcherart der Transponder in einem Raum innerhalb des ein- oder mehrspurigen Fahrzeuges untergebracht werden kann, zu dem ein Dieb dieses ein-oder mehrspurigen Fahrzeuges nur unter Zerstörung des aus Kunststoff oder Metall bestehenden Treibstofftanks gelangen kann. Die Erfahrung zeigt jedoch, dass es niemals im Interesse eines derartigen Täters ist, so umfangreiche Umbauarbeiten am gestohlenen Fahrzeug vorzunehmen. Die beschriebenen Füllkörper können über geeignete Einblasgeräte jederzeit im nachhinein in einen Treibstofftank eingebracht werden. Soferne ein Explosionsschutz des Behälters gewünscht wird, so wird der gesamte Behälter mit den beschriebenen Füllkörpern nach der vorliegenden Erfindung zu füllen sein. Es reicht dabei wenn nur einige der beschriebenen Füllkörper mit einem Transponder ausgestattet sind, um neben der Explosionsschutzfunktion auch die vorteilhafte Verwendung zur Identifikation zu ermöglichen. Soferne jedoch dieser Explosionsschutz nicht gewünscht wird, so würde es auch möglich und sinnvoll sein, nur einen einzigen oder mehrere der beschriebenen Füllkörper in den Tank - eben als Unterbringung für einen Transponder - einzubringen.

Generell wäre bereits ein einziger beschriebener Füllkörper mit einem einzigen Transponder ausreichend - aus Sicherheitsgründen wird jedoch erfindungsgemäss auch vorgeschlagen je nach Einsatzzweck und Behältergrösse mehrere gleichartige "Transponderfüllkörper" nach dieser Erfindung einzubringen. Von besonderen Vorteil ist auch der Umstand, dass sich auf diesem Transponder eine Vielzahl von Daten speichern lassen, die nicht nur dem Diebstahlsschutz, sondern auch beispielsweise dem Umweltschutz dienen können, oder auch Daten über verpflichtende Servicearbeiten und Sicherheitsparameter des befüllten Behälters beinhalten. So kann es von besonderen Vorteil sein, dass man mit den nach dieser Erfindung beschriebenen Füllkörpern, beispielsweise Flügeltanks von Flugzeugen befüllt und mittels eingemischter Transponderkugeln oder Füllkörpern gemäss der vorliegenden Erfindung, wichtige sicherheitsrelevante Daten das Flugzeug betreffend abspeichern kann. Gestohlene Fahrzeuge können mittels dieser in den Tank nach der gegenständlichen Erfindung hergestellten und eingebrachten Transponderfüllkugeln von der Polizei mittels Handlesegeräte bei Kontrollen ermittelt werden. Auch ist eine vollautomatische Detektion - beispielsweise bei Grenzübergängen oder bestimmten Abschnitten von Autobahnen - durch die Installation von sogenannten "ScanGates" auf beiden Seiten der Fahrbahn möglich. Dabei handelt es sich um unsichtbare Funkschranken die beim Durchfahren durch die Schranke das Transpondersignal überprüfen und im Falle eines als gestohlen gemeldeten Fahrzeuges Alarm auslösen. Auch kann ein Lesegerät beispielsweise in ein Fahrzeug der Polizei (Autobahnpolizei) so eingebaut werden, dass andere Fahrzeuge im Vorbeifahren gescannt werden.

Bei einem neuartigen Verfahren einer weiteren Ausführungsform der Erfindung ist es auch von besonderen Vorteil, Treibstofftanks von Fahrzeugen (Luft-,Wasser- und Bodenfahrzeuge) wie auch Lagertanks in der chemischen und petrochemischen Industrie, sowie Lagertanks mit Treibstoffen, mit den beschriebenen Füllkörpern nach der vorliegenden Erfindung komplett zu befüllen, um damit ein wesentliches Problem, nämlich einen Teil der Emission von Kohlenwasserstoffen (sogenannte "Treibhausgase") in die Umwelt, erstmalig auf einem völlig neuen Weg wesentlich zu reduzieren. Kohlenwasserstoffe werden bei der unvollständigen bzw. fehlenden Verbrennung der Kraftstoffe im Motor über den Auspuff freigesetzt. Daneben gelangen jedoch wesentliche Mengen durch Verdunstung des Benzins in die Atmosphäre. Kohlenwasserstoffe verdunsten beispielsweise aus dem Tank und anderen kraftstoffführenden Bauteilen der Fahrzeuge (Kraftstoffleitungen, Vergaser, Filter, Reservekanister etc.), sowie beim Umfüllen der Kraftstoffe in den Tank der Tankstellen und von der Tankstelle in den Fahrzeugtank. HC-Verdunstungsemissionen entstehen beispielsweise durch Druckunterschiede im Gasraum der Kraftstoffbehälter und der Vergaser-Schwimmerkammer der Fahrzeuge. Sie treten beim stehenden Fahrzeug durch den Temperaturverlauf über den Tag als Tankatmungsemissionen, beim Heißabstellen nach Langstreckenfahrten und beim Warmabstellen nach Kurzstreckenfahrten, auf. Auch wenn - beispielsweise ein Kunststofftank - augenscheinlich komplett verschlossen ist (Tankdeckel zugeschraubt), so ist er nicht dicht, da der normalerweise verwendete Kunststoff für den Tank, HDPE, für Kohlenwasserstoffe auf Molekülebene tatsächlich durchlässig ist und diese Schadstoffe in die Umwelt diffundieren. Die Anreicherung des HDPE mit Kraftstoff ist auch ein Problem für ein Recycling , da sich die Wände des Tanks mit den Kohlenwasserstoffen "vollsaugen" und der solcherart kontaminierte Behälter Sondermüll darstellt und nicht einfach durch Granulieren zu entsorgen ist. Das Bekanntsein dieser Tatsache hat in einigen Ländern, insbesondere in Kalifornien, zu rigorosen Gesetzesänderungen geführt. Die Zulassung und somit der Verkauf von Fahrzeugen in Kalifornien hängt von der Emission dieser Kohlenwasserstoffe ab. Dies gilt nicht nur für den Kraftstofftank und dessen Zu- und Ableitungen, sondern für das Gesamtfahrzeug. Diese Forderungen werden nach und nach auch in Europa bindend, sodass bei der Entwicklung und Herstellung von Kraftstofftanks die Materialauswahl eine zunehmende Rolle spielt. Die Problematik der solcherart durch Verdunstung und Verflüchtigung in die Atmosphäre gelangenden Stoffe gilt nicht nur für Treibstofftanks von PKWs, sondern für alle Arten von beweglichen und unbeweglichen Lagertanks von chemischen Flüssigkeiten und Treibstoffen. Flüchtige organische Verbindungen (Abkürzung: VOC bzw. VOCs nach volatile organic compound[s]) ist die Sammelbezeichnung für organische, also kohlenstoffhaltige Stoffe, die leicht verdampfen (flüchtig sind) bzw. schon als Gas bei niedrigen Temperaturen (z.B. Raumtemperatur) vorliegen. Bei der ebenfalls sehr häufig verwendeten Abkürzung NMVOCs (non methane volatile organic compounds) wird das Gas Methan aus der Gruppe der VOCs ausgeklammert. Das Wort "flüchtig" impliziert, dass die zu der Gruppe der VOC zählenden Stoffe aufgrund ihres hohen Dampfdruckes bzw. niedrigen Siedepunktes schnell verdampfen (sich verflüchtigen). Flüchtige organische Verbindungen werden gemäß der WHO nach ihrem Siedepunkt bzw. der daraus resultierenden Flüchtigkeit eingeteilt. Allerdings gibt es keine einheitliche Definition, was ein VOC tatsächlich ist. Einige Definitionen beinhalten tatsächlich Angaben zum Dampfdruck, andere, in der Regel neuere Definitionen, definieren VOC über ihre photochemische Reaktivität als sog. Vorläufersubstanzen für die Bildung von bodennahem Ozon. Darüber hinaus werden in einigen Definitionen bestimmte organische Stoffe explizit aus der VOC-Definition ausgeklammert. Zur Lösung der benannten Problematik sieht die vorliegende Erfindung vorteilshaft vor, die Treibstofftanks bei Fahrzeugen (Land-, See- und Luftfahrzeuge) und Lagertanks, mit den nach dieser Erfindung beschriebenen Füllkörper, entweder zur Gänze, oder die Oberfläche der zu lagernden Flüssigkeit mit mehreren Lagen von "schwimmenden" beschriebenen Füllkörpern nach Anspruch 44 zu befüllen, um damit das Eindampfen, Verdunsten und Verflüchtigen von den, in Fahrzeugen (Land-, See- und Luftfahrzeuge) und Lagertanks, gelagerten Flüssigkeiten (beispielsweise Benzin), und damit auch die Emission von Kohlenwasserstoffen aus diesen Fahrzeug- und Lagertanks, an die Umwelt zu reduzieren. Die besonders vorteilhafte Wirkung der nach der vorliegenden Erfindung beschriebenen Füllkörper ist, dass diese Füllkörper das Eindampfen, Verdunsten und Verflüchtigen von Flüssigkeiten wesentlich verlangsamen und vermindern, da es durch die starke Wärmeableitung der beschriebenen Füllkörper zu einer geringeren Verdunstung und darüber hinaus zu einer Rekondensation der Gase an den beschriebenen Füllkörpern im Behälter kommt.

Bei einem neuartigen Verfahren einer weiteren Ausführungsform der Erfindung ist es auch von besonderen Vorteil, Behälter mit flüssigen und gasförmigen Treibstoffen von Fahrzeugen (Luft-, Wasser-, Raum- und Landfahrzeuge), Rohrleitungen und Druckbehälter zur Gänze mit den beschriebenen Füllkörpern zu befüllen, um damit die Stabilität der Wände des befüllten Behälters gegenüber Einwirkungen von aussen zu erhöhen. Krafteinwirkungen von aussen auf Tank- oder Lagerbehälter im Falle eines Unfalles stellen ein erhebliches Risiko dar, da es dadurch zu Penetrationsverletzungen oder Einbuchtungen in den Tank- oder Lagerbehälter kommen kann. Ein weiteres Problem ist die Gefahr einer Implosion beim Entleeren von Tankbehältern, beispielsweise von Mineralölkesselwagen, ohne Zwangsbelüftungssysteme. Dabei wird durch das Entleeren des Inhaltes im Tankbehälter ein innerer Unterdruck erzeugt und es kommt durch den herrschenden äusseren Überdruck der lastenden Atmosphäre zu einem plötzlichen Zusammenfall des Tankbehälters. Das Gleiche gilt für Rohrleitungen und Druckbehälter, die nicht vakuumfest ausgeführt sind und deren Sicherheitsventil versagt. Erfindungsgemäss wird daher vorgeschlagen, den gesamten Behälter mit den nach der vorliegenden Erfindung beschriebenen Füllkörpern zu befüllen. Durch diese komplette Befüllung entsteht im Falle einer Penetrationsverletzung oder einer Implosion der Tankaussenhaut, ein "Gegendruck", den die beschriebenen Füllkörper - dieser, von der Tankaussenseite auf die Tankmitte, einwirkenden Kraft, entgegensetzen.

Bei einem neuartigen Verfahren einer weiteren Ausführungsform der Erfindung ist es auch von besonderen Vorteil die beschriebenen Füllkörper zum Schutz vor Explosionen und Verpuffungen bei Reparaturarbeiten in Tanks mit Treibstoffen und chemischen Flüssigkeiten und Gasen einzubauen und den zu schützenden Tank zur Gänze mit den nach dieser Erfindung beschriebenen Füllkörper zu befüllen. Reparaturarbeiten an gefüllten oder geleerten, jedoch nicht gereinigten Tankbehältern stellen ein erhebliches Risiko dar, da es bei Reparaturarbeiten zu Funkenflug (z.B. Schweissarbeiten) und damit verbunden in weiterer Folge zu Explosionen oder Verpuffungen von im Tank befindlichen explosionsgefährlichen Gas-/Luftgemischen kommen kann. Stand der Technik war bis jetzt, dass derartige Tanks vor den Beginn von Reparaturarbeiten zuerst komplett entleert und danach von Rückständen an den Tankinnenwänden gereinigt werden müssen. Erfindungsgemäss wird daher vorgeschlagen, den gesamten Tank mit den nach der vorliegenden Erfindung beschriebenen Füllkörpern zu befüllen. Durch die hohe Wärmeleitfähigkeit der beschriebenen Füllkörper wird jeglicher Funkenflug, basierend auf dem Prinzip der Oberflächenvergrösserung, neutralisiert und es kommt zu keiner Zündung eines explosiven Gas-/Luftgemisches. Damit sind gefahrlose Reparaturarbeiten auch bei Vorliegen eines explosiven Gas- und Luftgemisches im Treibstofftank möglich.

Bei einem neuartigen Verfahren einer weiteren Ausführungsform der Erfindung ist es auch von besonderen Vorteil die beschriebenen Füllkörper zur Verlangsamung des Verflüchtens von Wasserstoff in Wasserstofftanks einzubauen und den zu schützenden Tank zur Gänze mit den nach dieser Erfindung beschriebenen Füllkörpern zu befüllen. Die Lagerung von Wasserstoff stellt ein erhebliches Problem dar. Trotz der umfangreichen und mehrfachen Isolierung des Wasserstofftanks, beginnt sich der, bei minus 253 Grad getankte, Wasserstoff schon nach kurzer Zeit zu erwärmen und in weiterer Folge zu verflüchtigen (sogenannter "Boil-off-Effekt"). Der Verlust liegt derzeit bei bis zu ca. 4 - 6% / 24 Stunden. Dieses bekannt gewordene Problem stellt eines der Haupthindernisse bei dem weltweiten Einsatz von Wasserstoff als Treibstoff für Fahrzeuge dar. Erfindungsgemäss wird daher vorgeschlagen, den gesamten Wasserstofftank mit den nach der vorliegenden Erfindung beschriebenen Füllkörpern zu befüllen. Die beschriebenen Füllkörper verlangsamen und vermindern das Eindampfen des Wasserstoff wesentlich, da es durch die starke Wärmeableitung der beschriebenen Füllkörper zu einer geringeren Verdunstung des Wasserstoff und darüber hinaus zu einer Rekondensation des Wasserstoff an den beschriebenen Füllkörpern im geschlossenen Behälter kommt.

Bei einem neuartigen Verfahren einer weiteren Ausführungsform der Erfindung ist es auch von besonderen Vorteil, die nach dieser Erfindung beschriebenen Füllkörper als Füllkörper in der chemischen Industrie einzusetzen. Es ist bekannt geworden, dass Füllkörper der Verteilung von sie umgebenden Medien (Wasser, Dampf, Gas etc.) förderlich sind. Diese Füllkörper werden in grossen Becken oder Türmen dazu benutzt, um die sie umgebenden Medien zu verändern (waschen, biologisch umwandeln, kondensieren etc.). Derartige Füllkörper werden beispielsweise bei der Rektifikation unter Vakuum und Normaldruck, Absorption, Strippung, Extraktion, Brüdenkondensation und beim regenerativen Wärmetausch verwendet. Je nach Einsatzzweck erfolgt der Einbau derartiger Füllkörper in loser Schüttung horizontal oder vertikal in Rohrleitungen oder Kolonnen. Derartige Einbauten bezeichnet man als "Packungen". Dabei ist es hilfreich, grosse Oberflächen bei geringem Strömungswiderstand zu haben, insbesondere beim Einbau von Füllkörpern in Kühltürmen oder in statischen Mischern. Statische Mischer werden immer dann eingesetzt, wenn Gas- und/oder Flüssigkeitsströme möglichst homogen und dabei druckverlustarm zusammengeführt werden müssen. Beispielsweise werden bei der Herstellung von Natronlaugenmischungen bestimmter Konzentrationen und zur Mischung von Gasen zwecks Sicherung einer konstanten Temperatur oftmals diese statischen Mischer eingesetzt. Als Füllkörperkolonne bezeichnet man eine Trennsäule in der chemischen Industrie, die mit Füllkörpern in loser Schichtung gefüllt ist. Dabei liegen die Füllkörper auf perforierten Austauschböden in loser Schüttung, durch die Dampf strömt. Die gasförmigen Medien strömen in der Regel von unten nach oben durch solche. Kolonnen und die Flüssigkeit im Gegenstrom von oben nach unten, in besonderen Fällen im Querstrom oder Gleichstrom miteinander. Die nach dieser Erfindung beschriebenen Füllkörper können die bisher verwendeten Füllkörper vorteilshaft und erfindungsmässig neu ersetzen und bieten gegenüber den bisher verwendeten Systemen wesentliche Vorteile. So ist gewährleistet, das die Gefahr eines vertikalen Ineinanderschachtelns der Füllkörper - das sogenannte "Nesting" - dieses kann zu einer Brückenbildung, bzw. zur Bildung von Totzonen führen - verlässlich verhindert wird. Darüberhinaus können die nach der vorliegenden Erfindung beschriebenen Füllkörper aus hochhitzefesten Metallen gefertigt werden und halten damit wesentlich höheren Temperaturen als bisher verwendete Füllkörper aus Polypropylen, PVDF und wärmestabilisiertes Polypropylen stand. So sind die erfindungsgemäss beschriebenen Füllkörper vorteilshaft für verschiedene Betriebsbedingungen geeignet und an ihr jeweiliges Aufgabenprofil anpassbar. Von besonderem Vorteil beim Einsatz der erfindungsgemäss beschriebenen Füllkörpern ist insbesondere deren grossen Oberfläche bei gleichzeitig geringem Strömungs- und Druckverlust. Darüberhinaus eignen sie sich aufgrund ihrer Unempfindlichkeit gegen Verschmutzungen und Verkrustungen hervorragend für den Einsatz von feststoffbeladenen Flüssigkeiten.

Bei einem neuartigen Verfahren einer weiteren Ausführungsform der Erfindung ist es auch von besonderen Vorteil, die beschriebenen Füllkörper mit antibakteriellen (gegen Viren und Bakterien), bzw. antifungiziden (gegen Pilze) Eigenschaften je nach spezifischem Einsatzzweck auszustatten. Dies kann einerseits dadurch geschehen, dass bereits das Metall aus dem die beschriebenen Füllkörper bestehen, diese gewünschten Eigenschaften besitzt, oder, dass die beschriebenen Füllkörper mit einer entsprechend wirksamen Beschichtung (beispielsweise durch Beschichten der Oberflächen der beschriebenen Füllkörper mit Edelmetall) ausgestattet werden. Damit ist es möglich ,ein grosses weltweites Problem im Bereich von Lager- und Treibstofftanks (insbesondere im maritimen Bereich), ohne den Einsatz von chemischen Zusatzstoffen und mit einfachen Aufwand, lösen zu können. Dabei handelt es sich um die Verhinderung von negativen Auswirkungen von bakteriellen Zersetzungsvorgängen in Treibstoffen - ausgelöst durch eingeschleppte Erreger oder Kondenswasser - auch als sogenannte "Dieselpest" bezeichnet. In diesem Zusammenhang ist bekannt geworden, dass beispielsweise der Befall von Schmier- und Dieselöltanks mit derartigen Mikroorganismen bei jeder Tankfüllung erfolgen kann, ebenso durch Tankbelüftung und jegliche andere Verschmutzung. Als Folge eines mikrobiologischen Befalls sind Qualitätsverluste des Diesel- und Schmieröls zu verzeichnen. Darüberhinaus zerstören die Stoffwechselprodukte der Organismen das Material von Filterelementen, Rohren und insbesondere von Tankwänden. Beispielsweise ist bekannt geworden, dass ein Stoffwechselprodukt der Organismen - der Schwefelwasserstoff - die Korrosion wesentlich unterstützt und in weiterer Folge durch die Bildung eines mikrobiologischen Schleimes, Leitungen,Einspritzpumpen und Filterelemente verstopft werden. Stand der Technik ist, dass man versucht, mittels Filter und Wasserabscheider (meistens Kombi-Elemente bestehend aus einer Filterschicht und einem Phasentrenner-/Coalescer Element mit nachgeschaltener Separatormembran) beispielsweise den Dieselkraftstoff vor einem Anstieg der Wasserkonzentration - das Wasser stellt dabei die Basis für einen Befall und die Vermehrung von Mikroorganismen dar - zu schützen. Wenn jedoch die Tanks bereits mit Mikroorganismen kontaminiert sind, so werden die Mikroorganismen durch den Einsatz von spezifischen Bioziden abgetötet. Der genannte Stand der Technik ist mit erheblichen Konstruktions- und Wartungsaufwand verbunden und garantiert trotzdem keine absolute Sicherheit.

Bei einem neuartigen Verfahren einer weiteren Ausführungsform der Erfindung ist es auch von besonderen Vorteil, die beschriebenen Füllkörper zur Verminderung des "Schwalleffektes" von Flüssigkeiten und Flüssiggase in Tanks von Fahrzeugen (Luft-, See-, Raum- und Landfahrzeuge) einzubauen und diese Tanks zur Gänze mit den beschriebenen Füllkörpern zu befüllen. Beim Abbremsen oder Beschleunigen von Flüssigkeiten, wirkt eine Flüssigkeit als "träge Masse", die beispielsweise beim Beschleunigen nach hinten und beim Abbremsen nach vorne schwappt. Das Gleiche gilt für Kurvenfahrten, wo unter Einwirkung der Fliehkraft sich die Flüssigkeit zur Kurvenaussenseite hin verlagert. Diese plötzlichen Gewichtsverlagerungen von Flüssigkeiten und Flüssiggasen bei Transporten (beispielsweise auch bei schweren Seegang bei Schiffen) stellt weltweit ein besonders hohes Unfallrisiko dar. So fallen immer wieder Gefahrguttransporter auf der Strasse, in Folge von - durch den Schwalleffekt aufgetretener - Instabilität, um und kentern insbesondere Schiffe mit Flüssiggasladungen bei entsprechend höheren Seegang, da sich das Flüssiggas so stark "aufschaukelt", dass das Schiff sich "um die eigene Achse dreht". Stand der Technik war bis jetzt die negative Wirkung von Schwalleffekten durch den Einbau sogenannter "Schwallbleche" zu vermindern. Dabei handelt es sich um, meist durchbrochene, Trennwände, die in Flüssigkeitsbehältern eingebaut werden und sozusagen als "Wellenbrecher" fungieren. Diese Schwallbleche sind durchbrochen und nicht bis zur Decke des Flüssigkeitsbehälters hoch geführt. Schwallbleche werden unter anderem auch in Treibstofftanks von Kraftfahrzeugen (hier auch zur Geräuschminderung von hin- und herschwappenden Treibstoffen) und in Öl-Vorratsbehältern des Motors eingebaut. Im Falle der Öl-Vorratsbehälter wird damit verhindert, dass das Öl auf eine Seite wandert und der Öl-Ansaugstutzen danach Luft ansaugt und in so einem Falle die Motorschmierung unterbrochen würde. Der Wirkungsgrad dieser Technologie ist jedoch unbefriedigend, immer wieder stürzen, wie bereits ausgeführt, Gefahrguttransporter in Kurven von Landstrassen um. Darüberhinaus haben die Schwallbleche ein erhebliches Gewicht, das zu einer Erhöhung des Treibstoffverbrauches des Fahrzeuges führt. Erfindungsgemäss wird daher nunmehr das vollständige Befüllen des jeweiligen Tankbehälters mit den nach der vorliegenden Erfindung beschriebenen Füllkörpern vorgeschlagen. Da jeder einzelne beschriebene Füllkörper als "Minischwallblech" mit einer Vielzahl von "Wellenbrechern" funktioniert und solcherart die flüssige Ladung in eine Vielzahl von kleinen und kleinsten Wellenbewegungen gesplittet wird, wird das Zustandekommen eines nur mehr schwierig zu beherrschenden grossen "Schwalls" verhindert und die Flüssigkeit verlässlich stabilisiert.

Bei einem neuartigen Verfahren einer weiteren Ausführungsform der Erfindung ist es auch von besonderen Vorteil die beschriebenen Füllkörper zur Ableitung von Statischer Elektrizität in Tanks mit Treibstoffen und chemischen Flüssigkeiten und Gase einzubauen. Die statische Elektrizität stellt - beispielsweise bei Luftfahrzeugen - ein erhebliches Risiko dar. So kann es durch einen entstehenden Funkenflug (dieser entsteht durch den Ausgleich der elektrischen Ladungen), zur Zündung eines im Tank bestehenden Gas-Luftgemisches und damit zu einer Explosion kommen. Erfindungsgemäss wird daher vorgeschlagen, den gesamten Tank mit den nach der vorliegenden Erfindung beschriebenen Füllkörpern zu befüllen. Durch die hohe Leitfähigkeit der beschriebenen Füllkörper wird jegliche statische Elektrizität sofort und permanent vom Tankinhalt abgeleitet, sodass es zu keinem Funkenflug bei einem Ausgleich der Ladungen mehr kommen kann.

Bei einem neuartigen Verfahren einer weiteren Ausführungsform der Erfindung ist es auch von besonderen Vorteil die beschriebenen Füllkörper zum Schutz vor Elektromagnetischen Störungen (EMDs - Electromagnetic Disturbances) in Tanks mit Treibstoffen und chemischen Flüssigkeiten und Gasen einzubauen und den zu schützenden Tank zur Gänze mit den beschriebenen Füllkörpern zu befüllen. Elektromagnetische Störungen stellen - beispielsweise bei Luftfahrzeugen - ein erhebliches Risiko dar, da es dadurch zu Störungen in der Elektronik des Fahrzeuges kommen kann, die in weiterer Folge bis zu einem Absturz des Luftfahrzeuges aufgrund des Ausfalles sämtlicher Instrumente führen können. Erfindungsgemäss wird daher vorgeschlagen, den gesamten Tank mit den beschriebenen Füllkörpern zu befüllen. Durch die hohe Leitfähigkeit der nach der vorliegenden Erfindung beschriebenen Füllkörpern werden die - mit diesen beschriebenen Füllkörpern zur Gänze befüllten - Tanks mit Treibstoffen und chemischen Flüssigkeiten und Gasen gegen elektromagnetische Felder und elektromagnetische Störungen abgeschirmt.

Bei einem neuartigen Verfahren einer weiteren Ausführungsform der Erfindung ist es besonders vorteilshaft die beschriebenen Füllkörper zum Schutz vor B.L.E.V.E (englische Abkürzung für Boiling Liquid Expanding Vapour Explosion) in Tanks mit verflüssigten, brennbaren Gasen einzubauen und den zu schützenden Tank zur Gänze mit den nach dieser Erfindung beschriebenen Füllkörpern zu befüllen. Bei der B.L.E.V.E handelt es sich um eine Gasexplosion einer expandierenden siedenden Flüssigkeit. B.L.E.V.Es können insbesondere bei Druckgasbehältern entstehen, die brennbares, verflüssigtes Gas enthalten. B.L.E.V.Es stellen - beispielsweise bei Tankfahrzeugen - ein erhebliches Risiko dar, da es zu gewaltigen Explosionen nach einem ursprüngliche relativ harmlosen Tankwagenunfall kommen kann. Bei einer B.L.E.V.E tritt zuerst Gas durch ein Leck aus und verbrennt ruhig oder der Gastank wird einer externen Energiequelle ausgesetzt (beispielsweise Verbrennen des Kraftstoffes von dem Zugfahrzeug eines Gastanksattelzuges nach einem Unfall). Durch diese Energiequelle erhitzt sich der Gastank stark und immer mehr Gas verdampft in ihm. Nunmehr baut sich in dem Gasdruckbehälter ein ständig grösser werdender Druck auf, bis die durch das Feuer bereits geschwächten Behälterwände bersten. Dabei treten riesige Mengen Gas aus und entzünden sich sofort, sodass es zu einer gewaltigen Explosion in Form eines Feuerballes kommt, aus dem brennendes Flüssiggas herunterregnet. Erfindungsgemäss wird daher vorgeschlagen, den gesamten Tank mit den nach der vorliegenden Erfindung beschriebenen Füllkörpern zu befüllen. Die besonders vorteilhafte Wirkung der beschriebenen Füllkörper ist, dass diese beschriebenen Füllkörper das Eindampfen der Flüssigkeiten wesentlich verlangsamen und vermindern, da es durch die starke Wärmeableitung der beschriebenen Füllkörper zu einer geringeren Verdunstung und darüber hinaus zu einer Rekondensation der Gase an den beschriebenen Füllkörper im geschlossenen Behälter kommt. Durch den Einbau der beschriebenen Füllkörper wird der Druckaufbau im Gastank im Falle eines Unfalles wesentlich reduziert und verlangsamt, sodass es Feuerwehr und Rettungskräften wesentlich länger möglich wird, den Brand noch vor Auftreten einer B.L.E.V.E - Explosion zu löschen, oder Personen zu retten und zu evakuieren.

Bei einem neuartigen Verfahren einer weiteren Ausführungsform der Erfindung ist es besonders vorteilshaft die beschriebenen Füllkörper in Gasbehältnisse, insbesondere in Gasflaschen, einzusetzen. Derartige Gasbehältnisse, beispielsweise Hochdruckgasflaschen, werden derart befüllt, dass das Gas unter erheblicher Kompression in den Gasbehälter eingebracht wird. Es ist bekannt geworden, dass diese Kompression auf einen bestimmten Druck, neben einer angestrebten Verdichtung des Befüllgases, auch eine unerwünschte Temperaturerhöhung des Gases bewirkt. Diese Temperaturerhöhung ist insoferne nachteilig, als sie bewirkt, dass bei vorgegebenen Druck und Volumen weniger Befüllgas in das zu befüllende Gasbehältnis eingebracht werden kann. Hier wird nunmehr erfindungsgemäss vorgeschlagen, dass das Gasbehältnis zur Gänze mit den beschriebenen Füllkörpern nach Anspruch 6 bis 32 befüllt wird. Durch die hohe Leitfähigkeit der beschriebenen Füllkörper wird dem Befüllgas beim Einfüllvorgang wirksam Wärme entzogen. Durch diese Kühlung des Befüllgases kann bei vorgegebenen Druck und Volumen ein höherer Füllgrad als bisher erzielt werden.

Bei einem neuartigen Verfahren einer weiteren Ausführungsform der Erfindung ist es besonders vorteilshaft die beschriebenen Füllkörper zur Verminderung von Flüssigkeits- und Gasdruckspitzen beim Befüllen von Tankbehältnissen mit Flüssigkeiten und Gasen, insoferne zu nutzen, dass das gesamte Tankbehältnis zur Gänze mit den beschriebenen Füllkörpern nach einem der Ansprüche 6 bis 32 befüllt wird. Insbesondere beim Befüllen von Gasbehältnissen mit Befüllgas, kommt es zu einer starken Belastung der Innenwände des zu befüllenden Behältnisses, aufgrund des Auftretens von Druckspitzen. Derartige Druckspitzen entstehen durch den Umstand, dass das Befüllgas in Form eines gerichteten Strahles in das zu befüllende Gasbehältnis unter hohem Druck eingebracht wird. Hier wird nunmehr erfindungsgemäss vorgeschlagen, dass das Gas- oder Tankbehältnis zur Gänze mit den beschriebenen Füllkörpern befüllt wird, da deren geometrische Form und Stabilität dahingehend eine Wirkung entfalten, dass sie einen Gas- oder Flüssigkeitsstrahl beim Einfüllen in das Behältnis in eine Vielzahl von Teilstrahlen aufspalten, wodurch es zu einem wesentlichen Abbau von Druckspitzen innerhalb des Tankbehältnisses und damit zu einer Verminderung der Druckspitzen auf die Behälterinnenwände kommt.

Bei einem neuartigen Verfahren einer weiteren Ausführungsform der Erfindung ist es besonders vorteilshaft die beschriebenen Füllkörper zum Beheizen oder Kühlen von Flüssigkeiten und Gasen in Tankbehältnissen oder Rohrleitungen zu verwenden. Stoffe werden üblicherweise in Tankbehältnissen oder Rohrleitungen in gasförmigen oder flüssigen Zustand transportiert. Der Aggregatszustand der solcherart transportierten Stoffe hängt von der Temperatur ab. So geht der transportierte Stoff beispielsweise bei einem Abfall der Temperatur in einen dichteren Aggregatszustand über. Es ist bekannt geworden, dass die bei gasförmigen Stoffen zu einem Kondensatsniederschlag und zur Tröpfchenbildung an den Behälterinnenwänden führt, wo hingegen flüssige Stoffe zum sogenannten "Versulzen" neigen (beispielsweise das "Versulzen" von Dieseltreibstoff). Derartige Erscheinungen sind unerwünscht und nachteilig. Hier wird nunmehr erfindungsgemäss vorgeschlagen, dass der zu transportierende Stoff dadurch "von innen" beheizt oder gekühlt wird, dass die hervorragende Leitfähigkeit der beschriebenen Füllkörper nach einem der Ansprüche 6 bis 32 solcherart benutzt wird, dass das gesamte Tankbehältnis oder die Rohrleitung mit Füllkörpern nach einem der Ansprüche 6 bis 32 befüllt wird und an einen oder mehreren Füllkörpern ein permanenter Wärme- oder Kühlimpuls abgegeben wird, der von einem Füllkörper auf den nächsten übertragen wird. Dieser Wärme- oder Kühlimpuls kann von einem Wärme- oder Kühlelement, das sich ausserhalb des Tankbehältnisses, bzw. der Rohrleitung befindet, mittels direktem Kontakt (dabei wird der Kühl- oder Wärmekontakt durch einen die Behälter- oder Rohrwandung durchdringenden Leiter in Stab- oder Ringform hergestellt) oder indirektem Kontakt (ohne Durchdringung der Behälter- oder Rohrwandung, vorzugsweise mittels Induktion oder eines Mikrowellenfeldes) hergestellt werden.

Bei einem neuartigen Verfahren einer weiteren Ausführungsform der Erfindung ist es besonders vorteilshaft die beschriebenen Füllkörper zur Reduzierung von Verdunstungsverlusten die durch das Verdunsten und Verflüchtigen von - in beweglichen Tankbehältern von Fahrzeugen (Land-, See-, Raum- und Luftfahrzeuge) oder unbeweglichen Tankbehältern (Lagertanks) gelagerten - Flüssigkeiten entstehen. Derartige Verdunstungsverluste stellen einen wesentlichen Faktor beispielsweise beim Transport von flüssigen Treibstoffen bei Tankschiffen dar. Durch den oft wochenlangen Wassertransport und der von aussen auf das Schiff einwirkenden Temperatur, kommt es zu einer starken Verdunstung der eingelagerten Flüssigkeit (beispielsweise Benzin). Es ist bekannt geworden, dass in so einem Falle die Verdunstungsgase sogar am Schiff abgefackelt werden müssen, um eine Explosionsgefahr zu vermindern. Die Verdunstungsverluste führen zu einer Verminderung und zu einem Verlust der Ladung, sodass am Ende des Transportes weniger Ladegut als am Beginn des Transportes beim Empfänger ankommt. Erfindungsgemäss wird daher vorgeschlagen, die Tankbehältnisse mit den nach der vorliegenden Erfindung beschriebenen Füllkörpern komplett zu befüllen. Die beschriebenen Füllkörper verlangsamen und vermindern die Verdunstung und Verflüchtigung der transportierten Stoffe wesentlich und vermindern daher den finanziellen Verlust für den Transporteur.

### ZEICHNUNGEN - ERKLÄRUNG

In den ***Fig. 1*** bis ***3*** und ***11*** und ***12*** ist die Erfindung an Ausführungsformen beispielsweise dargestellt, ohne auf diese Ausführungsformen beschränkt zu sein und wird die Erfindung unter Bezugnahme auf die Zeichnung noch weiter erläutert.

In der Zeichnung zeigen im Einzelnen:
***Fig. 1*** eine Seitenansicht eines erfindungsgemässen kugelförmigen Füllkörpers;
***Fig. 2*** eine Ansicht von oben eines erfindungsgemässen kugelförmigen Füllkörpers;
***Fig. 3*** eine Ansicht von unten eines erfindungsgemässen kugelförmigen Füllkörpers;
***Fig. 4*** eine Ansicht einer Streckmetallbahn, gemäss Stand der Technik;
***Fig. 5*** Ansichten von zylinder- und ellipsenförmigen Füllkörpern aus Streckmetall, gemäss Stand der Technik;
***Fig. 6*** eine Ansicht von kugelförmigen Füllkörpern aus Streckmetall, gemäss Stand der Technik;
***Fig. 7*** eine schaubildliche Teil-Ansicht eines Leitungsrohres, samt mehrerer darin befindlicher kugelförmiger Füllkörper aus Streckmetall gemäss Stand der Technik;
***Fig. 8*** eine schaubildliche Teil-Ansicht eines Leitungsrohres, samt mehrerer darin befindlicher erfindungsgemässer kugelförmiger Füllkörper;
***Fig. 9*** eine schaubildliche Teil-Ansicht eines Treibstofftanks, samt mehrerer darin befindlicher erfindungsgemässer kugelförmiger Füllkörper
***Fig. 10*** eine schaubildliche Teil-Ansicht einer Anlage zur Befüllung eines PKW-Treibstofftanks, samt mehrerer darin befindlicher erfindungsgemässer kugelförmiger Füllkörper;
***Fig. 11*** eine Seitenansicht eines erfindungsgemässen kugelförmigen Füllkörpers mit eingezeichnetem Bereich zur Einbringung eines länglichen rohrförmigen Hohlkörpers und
die ***Fig. 12*** eine skizzierte Seitenansicht eines länglichen rohrförmigen Hohlkörpers

Die ***Fig. 1******,*** ***2*** und ***3*** zeigen einen erfindungsgemässen kugelförmigen Füllkörper, welcher aus mehreren scheibenartigen kreisförmigen Vertikalflächen **1, 2** und **3,** sowie scheibenartigen parallel zueinander verlaufenden kreisförmigen Horizontalflächen 7, **8** und **10** besteht. In der Mitte der Horizontalfläche **10** befindet sich eine kreisförmige Öffnung **6,** die zusammen mit dem oberen, nach innen offenen, kreisförmigen hülsenartigen Körper **4** und dem unteren, nach innen offenen kreisförmigen hülsenartigen Körper **5,** eine axial durchgehende Röhre mittig von oben **4** nach unten **5** bilden, wobei die Innendurchmesser der hülsenartigen und nach innen offenen kreisförmigen Körper **4** und **5** und der kreisförmigen Öffnung **6** ident sind. Die Vertikalflächen **1** gehen von der Aussenkante des kugelförmigen Körpers bis zum Rand der jeweiligen kreisförmigen Durchbrüche **4, 5** und **6** der jeweils die Durchbrüche umgebende parallel verlaufende Horizontalflächen 7, **10** und **8.** Die Vertikalflächen 2 gehen von der Aussenkante des kugelförmigen Körpers bis zur Hälfte des Abstandes zwischen Aussenkante des kugelförmigen Körpers auf den Horizontalflächen **8** und **10,** und dem Rand der kreisförmigen Durchbrüche **5** und **6** der Horizontalflächen. Die Vertikalflächen **3** bilden oben **4** und unten **5** die Verbindung zwischen den Horizontalflächen **7** und **8,** und den hülsenartigen Körpern **4** und **5.** In den Horizontalflächen **8** und 7 befinden sich Öffnungen **9.** Diese sind derart angeordnet, dass jeweils auf der Horizontalfläche **8** eine Öffnung **9** zwischen den Vertikalflächen **1** und **2,** und jeweils auf der Horizontalfläche **7** eine Öffnung **9** zwischen den Vertikalflächen **3,** angeordnet sind.

***Fig. 4*** zeigt eine Darstellung von Streckmetall **11** gemäss Stand der Technik.

Die ***Fig. 5*** zeigt Ansichten von zylinderförmigen Füllkörpern **12** aus Streckmetall gemäss Stand der Technik.

***Fig. 6*** zeigt eine Ansicht von kugelförmigen Füllkörpern **13** aus Streckmetall gemäss Stand der Technik.

Die ***Fig. 7*** zeigt eine gewundene Rohrleitung **14,** in der kugelförmige Füllkörper aus Streckmetall **15** gemäss Stand der Technik (bei diesen kann es sich beispielsweise um die Körper **12** und **13** handeln), eingebracht werden und sich dabei diese kugelförmigen Füllkörper 15 bei der Rohrwindung **16** mehrfach stauchen und verklemmen **17.**

***Fig. 8*** zeigt eine gewundene Rohrleitung **18,** in der erfindungsgemässe kugelförmige Füllkörper **19** in Richtung **21** eingebracht werden und dabei die Füllkörper **19** die Rohrwindung **20** problemlos überwinden und in weiterer Folge die Füllkörper **19** in Richtung **21** die Rohrleitung **18** passieren.

Die ***Fig. 9*** zeigt eine seitliche Innenansicht eines Treibstofftanks **24,** der mit Treibstoff **25** zur Hälfte gefüllt ist, in den über einen Einfüllstutzen **22** die erfindungsgemässen kugelförmigen Füllkörper **23** eingebracht werden.

***Fig. 10*** zeigt in einer Prinzipdarstellung den Tankeinfüllstutzen **26** eines Pkw in dem mittels Einblasgerät **27** die erfindungsgemässen kugelförmigen Füllkörper **28** eingebracht werden.

Die ***Fig. 11*** zeigt eine Seitenansicht des erfindungsgemässen kugelförmigen Füllkörpers **29,** in welchem sich eine röhrenförmige axial durchgehende Öffnung **30,** die schraffiert gekennzeichnet ist, befindet.

***Fig. 12*** zeigt einen länglichen rohrförmigen Hohlkörper **31,** der sich im erfindungsgemässen Füllkörper **29** befindet.

## Patentansprüche

1. Kugelförmiger, hohler Füllkörper, vorzugsweise zum Befüllen von Behältern, bestehend aus konzentrisch, unter einem bestimmten Winkel zueinander angeordneten scheibenartigen Vertikalflächen (3) **dadurch gekennzeichnet, dass** drei oder mehrere scheibenartige Vertikalflächen (3) vorgesehen sind und rechtwinkelig dazu zwei oder mehrere parallel zueinander verlaufende, scheibenartige Horizontalflächen (7, 8,10) angeordnet sind.

2. Füllkörper nach Anspruch 1, **dadurch gekennzeichnet, dass** sich in der Mitte der Horizontalfläche (10) eine kreisrunde Öffnung (6) befindet, die zusammen mit einem oberen, nach innen offenen, hülsenartigen Körper (4) und einem unteren, nach innen offenen hülsenartigen Körper (5) , eine axial durchgehende röhrenförmige Öffnung (30) axial von oben (4) nach unten (5) bildet, wobei die Innendurchmesser der hülsenartigen und nach innen offenen kreisförmigen Körper (4, 5) und der kreisförmigen Öffnung (6) ident sind.

3. Füllkörper nach Anspruch 2, **dadurch gekennzeichnet, dass** die Vertikalflächen (1) von ihrer Aussenkante bis zum jeweiligen Rand der kreisförmigen Durchbrüche (4,5,6), der jeweils, die kreisförmigen Durchbrüche (4, 5, 6) umgebenden, parallel verlaufenden, Horizontalflächen (7, 8,10), reichen.

4. Füllkörper nach Anspruch 3, **dadurch gekennzeichnet, dass** die Vertikalflächen (2) von ihrer Aussenkante bis zur Hälfte des Abständes zwischen der Aussenkante der Vertikalfläche (2) und dem Rand der kreisförmigen Durchbrüche (5, 6) der parallel laufenden Horizontalflächen (8,10) reichen,

5. Füllkörper nach Anspruch 4, **dadurch gekennzeichnet, dass** die Vertikalflächen (3) jeweils oben (4) und unten (5) die rechtwinkelige Verbindung zwischen den parallel angeordneten Horizontalflächen (7, 8) und den hülsenartigen Körpern (4, 5) bilden.

6. Füllkörper nach Anspruch 1 bis 5, **dadurch gekennzeichnet dass** sich auf den Horizoritalflächen (7, 8) kreisförmige Öffnungen (9) befinden, die derart angeordnet sind, dass sich jeweils auf der Horizontalfläche (8) eine Öffnung (9) zwischen den Vertikalflächen (1, 2) und jeweils auf der Horizontalfläche (7) eine Öffnung zwischen den Vertikalflächen (3) befinden.

7. Füllkörper nach Anspruch 1 bis 6, **dadurch gekennzeichnet, dass** die gesamte Füllkörperoberfläche glatt oder porös ausgebildet ist

8. Füllkörper nach Anspruch 1, bis 7, **dadurch gekennzeichnet, dass** der gesamte Füllkörper mit einem Alkalibichromat beschichtet ist.

9. Füllkörper nach Anspruch 1 bis 8, **dadurch gekennzeichnet dass** ein, genau dem Durchmesser und der Länge der Öffnung (30), angepasster Hohlkörper (31), axial von oben (4) nach unten (5), eingeführt und beispielsweise durch Verspreizen oder Verkleben in dem Füllkörper befestigt ist und der Hohlkörper (31) mit einer brandhemmenden Füllung wie Natriumbicarbonat, Zink- oder Natriumborat, Calciumbromid, Calciumchlorid-Dihydrat, Calciumchlorid-Hexahydrat oder Oleate (Salze und Ester der Ölsäure) versehen ist.

10. Füllkörper nach Anspruch 9, **dadurch gekennzeichnet, dass** die Füllung des Hohlkörpers (31) vorzugsweise ein brandhemmendes Löschgel ist, das als alkalischen Stoff ein Polymer enthält, in dem Wasser gebunden ist.

11. Füllkörper nach Anspruch 9 bis 10, **dadurch gekennzeichnet, dass** die Aussenhülle des Hohlkörpers (31) aus einer dünnen Wachsschicht besteht, die im Falle eines Brandes abschmilzt und den Inhalt freigibt.

12. Füllkörpern nach Anspruch 11, **dadurch gekennzeichnet, dass** der Temperaturschwellenwert der Wachsschicht des Hohlkörpers (31) dem jeweiligen Einsatzgebiet des Füllkörpers angepasst ist.

13. Füllkörper nach Anspruch 1 bis 8, **dadurch gekennzeichnet, dass** ein, genau dem Durchmesser und der Länge der Öffnung (30), angepasster Hohlkörper (31), axial von oben (4) nach unten (5), eingeführt und beispielsweise durch Verspreizen oder Verkleben in dem Füllkörper befestigt ist und sich in diesem Hohlkörper (31) ein aktiver oder passiver RFID (Radio Frequency Identification) Transponder Chip befindet.

14. Füllkörper nach Anspruch 1 bis 8, **dadurch gekennzeichnet, dass** ein, genau dem Durchmesser und der Länge der Öffnung (30), angepasster Hohlkörper (31), axial von oben (4) nach unten (5), eingeführt und beispielsweise durch Verspreizen oder Verkleben in dem Füllkörper befestigt ist und dieser Hohlkörper (31) aus einem schwimmfähigen und unbrennbaren Schaummaterial als Auftriebsmittel für den Füllkörper besteht, und, sofern es der Einsatzzweck notwendig macht, in Kammern unterteilt ist, die mit verschiedenen Stoffen, beispielsweise ein Teil Löschgel und ein Teil schwimmfähiger Schaumstoff, gleichzeitig befüllt sind.

15. Füllkörper nach Anspruch 1 bis 8, **dadurch gekennzeichnet, dass** ein, genau dem Durchmesser und der Länge der Öffnung (30), angepasster Hohlkörper (31), axial von oben (4) nach unten (5), eingeführt und beispielsweise durch Verspreizen oder Verkleben in dem Füllkörper befestigt ist und dieser Hohlkörper (31) aus einem bei Hitze stark aufschwellendem Material besteht.

16. Füllkörper nach Anspruch 1 bis 7 und 9 bis 15, **dadurch gekennzeichnet, dass** der gesamte Füllkörper mit einem Edelmetall beschichtet ist.

17. Füllkörper nach Anspruch 1 bis 7 und 9 bis 15, **dadurch gekennzeichnet dass** der gesamte Füllkörper mit einer antibakteriellen und/oder antifungiziden Funktionsaussenbeschichtung versehen ist, wobei diese Beschichtung vorzugsweise mittels SOL-GEL-Verfahren hergestellt wird.

18. Verfahren zur Befüllung von Tankbehältnissen mit flüssigen und gasförmigen Treibstoffen **dadurch gekennzeichnet, dass** die Füllkörper nach einem der Ansprüche 1 bis 17, mittels geeigneter Einblasgeräte (27) in Treibstofftanks (24) oder Behältnisse mit flüssigen und gasförmigen Stoffen über vorhandene Einfüllöffnungen (26) eingebracht werden, oder aus diesen zu Wartungszwecken mittels geeigneter Sauggeräte gesaugt werden.

19. Verfahren zum Schutz von Behältern für brennbare Flüssigkeiten oder Gase vor explosionsartigen Verbrennungsvorgängen, **dadurch gekennzeichnet, dass** der zu schützende Behälter zur Gänze mit Füllkörpern nach einen der Ansprüche 1 bis 17 befüllt wird.

20. Verfahren zum Löschen von Bränden von brennbaren Flüssigkeiten, **dadurch gekennzeichnet, dass** der zu schützende Behälter für brennbare Flüssigkeiten zur Gänze mit Füllkörpern nach Anspruch 9 bis 12 befüllt wird und im Brandfalle die Wachsschicht des Hohlkörpers (31) abschmilzt und den in dem Hohlkörper (31) befindlichen brandhemmenden Wirkstoff an die brennende Umgebung freisetzt.

21. Verfahren zum Korrosionsschutz von Behältern für brennbare Flüssigkeiten, **dadurch gekennzeichnet, dass** der zu schützende Behälter zur Gänze mit Füllkörpern nach Anspruch 12 befüllt wird und das Bichromat bewirkt, dass Wasser aus Brennstoffen und deren Behälter entfernt wird.

22. Verfahren zum Schutz von Behältern für brennbare Flüssigkeiten vor explosionsartigen Verbrennungsvorgängen, **dadurch gekennzeichnet, dass** Füllkörper nach Anspruch 14 ein- oder mehrlagig schwimmend auf der Oberfläche von brennbaren oder explosiven Flüssigkeiten in Tankbehältnissen lückenlos aufgebracht werden, und diese ein-oder mehrlagige Barriere an der Oberfläche der Flüssigkeit als Zündsperre zwischen Flüssigkeit und dem Gas-/Luftraum im Tankbehältnis fungiert.

23. Verfahren zum Löschen von Bränden von brennbaren Flüssigkeiten, **dadurch gekennzeichnet, dass** Füllkörper nach Anspruch 14 im Brandfalle ein- oder mehrlagig schwimmend auf der Oberfläche einer brennenden Flüssigkeiten lückenlos aufgebracht werden.

24. Verfahren zur Schaffung einer luftdurchlässigen Flammen- und Zündsperre in Domschächten, Hohlräumen, hinterbelüfteten Fassaden, Klimaanlagen und Rohrleitungen, **dadurch gekennzeichnet, dass** die zu schützenden Domschächte, Hohlräume, hinterbelüftete Fassaden, Klimaanlagen und Rohrleitungen mit Füllkörpern nach einem der Ansprüche 1 bis 13 in Teilabschnitten oder zur Gänze befüllt werden.

25. Verfahren zur Schaffung einer undurchlässigen Zünd- und Flammensperre in Domschächten, Hohlräumen, hinterbelüfteten Fassaden, Klimaanlagen und Rohrleitungen, **dadurch gekennzeichnet, dass** die zu schützenden Domschächte, Hohlräume, hinterbelüftete Fassaden, Klimaanlagen und Rohrleitungen mit Füllkörpern nach Anspruch 15 in Teilabschnitten oder zur Gänze befüllt werden.

26. Verfahren zur Schaffung einer Bakteriensperre in Klimaanlagen, **dadurch gekennzeichnet, dass** Füllkörper nach Anspruch 15 bis 17 in den Schächten der zu schützenden Klimaanlage solcherart eingebaut werden, dass der Klimaschacht ganz oder in Teilabschnitten befüllt wird.

27. Verfahren zur Integration eines aktiven oder passiven RFID (Radio Frequency Identification) Transponders in einen befüllten oder unbefüllten Tankbehälter, **dadurch gekennzeichnet, dass** ein oder mehrere Füllkörper nach Anspruch 13 bis 14 in den Tankbehälter eingebracht werden und die Daten der in diesen Füllkörpern integrierten Transponder mittels mobilen oder festmontierten Lesegeräten, ohne Zerstörung oder Beeinträchtigung des befüllten oder unbefüllten Behältnisses, von aussen empfangen und ausgelesen werden können.

28. Verfahren zur Reduzierung von Kohlenwasserstoffemissionen (sogenannte "Treibhausgase"), die durch Eindampfen, Verdunsten oder Verflüchtigen von - in beweglichen Tankbehältern von Fahrzeugen (Land-, See-, Raum- und Luftfahrzeuge) oder unbeweglichen Tankbehältern (Lagertanks) - gelagerten Flüssigkeiten oder Gasen entstehen, **dadurch gekennzeichnet, dass** der bewegliche oder unbewegliche Tankbehälter zur Gänze mit Füllkörpern nach einem der Ansprüche 1 bis 13 und 15 bis 17 befüllt wird.

29. Verfahren zur Reduzierung von Kohlenwasserstoffemissionen (sogenannte "Treibhausgase"), die durch Eindampfen, Verdunsten oder Verflüchtigen von - in beweglichen Tankbehältern von Fahrzeugen (Land-, See-, Raum- und Luftfahrzeuge) oder unbeweglichen Tankbehältern (Lagertanks) - gelagerten Flüssigkeiten oder flüssigen Gasen entstehen, **dadurch gekennzeichnet, dass** auf der Oberfläche der gelagerten Flüssigkeit eine- oder mehrere Lagen der schwimmenden Füllkörper nach Anspruch 14 bis 17 aufgebracht werden.

30. Verfahren zur Erhöhung der Stabilität und Crash-Sicherheit von Behältern mit brennbaren und explosiven Flüssigkeiten und Gasen bei mechanischen Einwirkungen auf die Behälterwände von aussen, **dadurch gekennzeichnet, dass** der zu schützende Behälter zur Gänze mit Füllkörpern nach einem der Ansprüche 6 bis 17 befüllt wird und diese Befüllung dem von aussen auf die Behälteraussenwände einwirkenden Druck einen entsprechenden Gegendruck entgegensetzt.

31. Verfahren zur Verhinderung von Implosionen von Tankbehältern - beispielsweise von Mineralölkesselwagen - ohne Zwangsbelüftungssysteme, sowie Rohrleitungen und Druckbehälter, die nicht vakuumfest ausgeführt sind und deren Sicherheitsventil versagt, **dadurch gekennzeichnet, dass** die zu schützenden Tankbehälter, Rohrleitungen und Druckbehälter zur Gänze mit Füllkörpern nach einem der Ansprüche 6 bis 17 befüllt werden und diese Füllkörper im Falle, dass durch das Entleeren der zu schützenden Tankbehälter, Rohrleitungen und Druckbehälter, in deren inneren ein Unterdruck erzeugt wird, dem in so einem Fall von aussen auf die Behälterwände einwirkenden äusseren Überdruck der lastenden Atmosphäre entgegenwirken.

32. Verfahren zur Ermöglichung von Schweissarbeiten an befüllten oder ungereinigten Behältern mit brennbaren und explosiven Flüssigkeiten und Gasen ohne die Gefahr von Explosionen oder starken Verpuffungen, **dadurch gekennzeichnet, dass** die Behälter mit brennbaren und explosiven Flüssigkeiten und Gasen zur Gänze mit den Füllkörpern nach einem der Ansprüche 6 bis 17 vor Beginn der Reparaturarbeiten befüllt werden.

33. Verfahren zur Verminderung des "Boil-off-Effektes" von Wasserstoff, **dadurch gekennzeichnet, dass** der gesamte Wasserstofftank mit Füllkörpern nach einem der Ansprüche 6 bis 17 befüllt wird.

34. Verfahren zur Optimierung von Anwendungen in der chemischen Industrie - wie beispielsweise bei der Rektifikation unter Vakuum und Normaldruck, bei der Absorption, Strippung, Extraktion, Brüdenkondensation und beim regenerativen Wärmetausch, sowie beim waschen, biologisch umwandeln, kondensieren etc. - bei denen es vor allem wichtig ist, mit Füllkörpern grosse Oberflächen bei geringem Strömungswiderstand zu haben, **dadurch gekennzeichnet, dass** dafür Füllkörper nach einem der Ansprüche 6 bis 17 zum Einsatz kommen und diese Füllkörper nach einem der Ansprüche 6 bis 17 beispielsweise in Form von Packungen in loser Schüttung, horizontal oder vertikal, in Rohrleitungen oder Kolonnen eingebaut werden.

35. Verfahren zur Verhinderung von Bakterien und Pilzen in Tankbehältern, **dadurch gekennzeichnet, dass** der Tankbehälter zur Gänze mit Füllkörpern nach Anspruch 16 bis 17 befüllt wird.

36. Verfahren zur Verminderung des Schwalleffektes von Flüssigkeiten und Flüssiggasen in beweglichen Tankbehältern von Luft-, Raum-, See- und Landfahrzeugen, **dadurch gekennzeichnet, dass** der jeweilige Tank zur Gänze mit Füllkörpern nach einem der Ansprüche 6 bis 17 befüllt wird.

37. Verfahren zur Ableitung von statischer Elektrizität in beweglichen und stationären Tankbehältern mit Treibstoffen, chemischen Flüssigkeiten und Gasen, **dadurch gekennzeichnet, dass** der zu schützende Tankbehälter zur Gänze mit Füllkörpern nach einem der Ansprüche 6 bis 17 befüllt wird.

38. Verfahren zum Schutz von Tankbehältern mit Treibstoffen, chemischen Flüssigkeiten und Gasen, vor elektromagnetischen Störungen EMDs (Electromagnetic Disturbances), **dadurch gekennzeichnet, dass** der zu schützende Tankbehälter zur Gänze mit Füllkörpern nach einem der Ansprüche 1 bis 17 befüllt wird.

39. Verfahren zur Verminderung und Verzögerung des B.L.E.V.E. (Boiling Liquid Expanding Vapour Explosion) Effektes in Tankbehältern mit verflüssigten, brennbaren Gasen, **dadurch gekennzeichnet, dass** der zu schützende Tankbehälter zur Gänze mit Füllkörpern nach einem der Ansprüche 1 bis 17 befüllt wird.

40. Verfahren zur Erhöhung der Befüllmenge beim Befüllen von Gasbehältnissen bei vorgegebenen Volumen und Druck des Gasbehältnisses, **dadurch gekennzeichnet, dass** das leere Gasbehältnis zur Gänze mit Füllkörpern nach einem der Ansprüche 1 bis 17 befüllt wird.

41. Verfahren zur Verminderung von Flüssigkeits- und Gasdruckspitzen beim Befüllen von Tankbehältnissen mit Flüssigkeiten und Gasen, **dadurch gekennzeichnet, dass** das gesamte Tankbehältnis zur Gänze mit Füllkörpern nach einem der Ansprüche 1 bis 17 befüllt wird und diese einen Gas- oder Flüssigkeitsstrahl beim Einfüllen in das Behältnis in eine Vielzahl von Teilstrahlen aufspalten, wodurch es zu einem wesentlichen Abbau von Druckspitzen innerhalb des Tankbehältnisses und damit zu einer Verminderung der Druckspitzen auf die Behälterinnenwände kommt.

42. Verfahren zum Beheizen oder Kühlen von Flüssigkeiten und Gasen in Tankbehältnissen oder Rohrleitungen, **dadurch gekennzeichnet, dass** das gesamte Tankbehältnis oder die Rohrleitung mit Füllkörpern nach einem der Ansprüche 1 bis 17 befüllt wird und zumindestens einer der Füllkörper nach einem der Ansprüche 1 bis 17 in direktem Kühl- oder Wärmekontakt mit einem Kühl- oder Wärmeelement steht, wobei dieses Kühl- oder Wärmeelement vorzugsweise ausserhalb des Tankbehältnisses bzw. der Rohrleitung ist und der Kühl- oder Wärmekontakt durch einen die Behälter- oder Rohrwandung durchdringenden Leiter in Stab- oder Ringform hergestellt wird.

43. Verfahren zum Beheizen oder Kühlen von Flüssigkeiten und Gasen in Tankbehältnissen oder Rohrleitungen, **dadurch gekennzeichnet, dass** das gesamte Tankbehältnis oder die Rohrleitung mit Füllkörpern nach einem der Ansprüche 1 bis 17 befüllt wird und zumindestens einer der Füllkörper durch eine ausserhalb des Tankbehältnisses oder der Rohrleitung befindliche Wärmequelle, ohne Durchdringen der Behälter- oder Rohrwandung, vorzugsweise mittels Induktion oder eines Mikrowellenfeldes, erwärmt wird.

44. Verfahren zur Reduzierung von Verdunstungsverlusten, die durch das Verdunsten von - in beweglichen Tankbehältern von Fahrzeugen (Land-, See-, Raum- und Luftfahrzeuge) oder unbeweglichen Tankbehältern (Lagertanks) - gelagerten Flüssigkeiten entstehen, **dadurch gekennzeichnet, dass** der bewegliche oder unbewegliche Tankbehälter zur Gänze mit Füllkörpern nach einem der Ansprüche 1 bis 17 befüllt wird.

## Claims

1. A spherical, hollow filling body, preferably for filling containers, consisting of disk-shaped vertical surfaces (3) arranged concentrically and at a certain angle with respect to one another, **characterized in that** three or more disk-shaped vertical surfaces (3) are provided, and that two or more disk-shaped horizontal surfaces (7, 8, 10) extending parallel to one another are arranged at right angles thereto.

2. The filling body according to claim 1, **characterized in that** a circular opening (6) is provided in the centre of the horizontal surface (10), which opening (6), together with an upper inwardly-open sleeve-shaped body (4) and a lower inwardly-open sleeve-shaped body (5), forms an axially-continuous, tubular opening (30) axially from top (4) to bottom (5), wherein the inside diameters of the sleeve-shaped and inwardly-open, circular bodies (4, 5) and of the circular opening (6) are identical.

3. The filling body according to claim 2, **characterized in that** the vertical surfaces (1) extend from their outer edge to the respective edge of the circular through holes (4, 5, 6) of the respective horizontal surfaces (7, 8, 10) running parallel and surrounding the circular through holes (4, 5, 6).

4. The filling body according to claim 3, **characterized in that** the vertical surfaces (2) extend from their outer edge as far as half the distance between the outer edge of the vertical surface (2) and the edge of the circular through holes (5, 6) of the parallel-running horizontal surfaces (8, 10).

5. The filling body according to claim 4, **characterized in that** the vertical surfaces (3), at the top (4) and at the bottom (5), respectively, form the right-angled connection between the parallel-arranged horizontal surfaces (7, 8) and the sleeve-shaped bodies (4, 5).

6. The filling body according to claims 1 to 5, **characterized in that** circular openings (9) are provided on the horizontal surfaces (7, 8) which are arranged in such a manner that there is a respective opening (9) on the horizontal surface (8) between the vertical surfaces (1, 2), and a respective opening on the horizontal surface (7) between the vertical surfaces (3).

7. The filling body according to claims 1 to 6, **characterized in that** the entire filling-body surface is smooth or porous.

8. The filling body according to claims 1 to 7, **characterized in that** the entire filling body is coated with an alkali bichromate.

9. The filling body according to claims 1 to 8, **characterized in that** a hollow body (31) which is adapted precisely to the diameter and the length of the opening (30) is introduced axially from top (4) to bottom (5) and fixed inside the filling body, for example, by strutting or gluing, and that the hollow body (31) is provided with a flame-retardant filling, such as sodium bicarbonate, zinc borate or sodium borate, calcium bromide, calcium chloride dihydrate, calcium chloride hexahydrate or oleates (salts and esters of oleic acid).

10. The filling body according to claim 9, **characterized in that** the filling of the hollow body (31) preferably is a flame-retardant, fire-extinguishing gel which contains a polymer as an alkaline substance in which water is bound.

11. The filling body according to claim 9 to 10, **characterized in that** the outer sleeve of the hollow body (31) consists of a thin wax layer which melts off and releases its content in case of fire.

12. The filling body according to claim 11, **characterized in that** the temperature threshold value of the wax layer of the hollow body (31) is adapted to the respective field of application of the filling body.

13. The filling body according to claims 1 to 8, **characterized in that** a hollow body (31) which is adapted precisely to the diameter and the length of the opening (30) is introduced axially from top (4) to bottom (5) and fixed inside the filling body, for example, by strutting or gluing, and **in that** an active or passive RFID (radio frequency identification) transponder chip is provided in this hollow body (31).

14. The filling body according to claims 1 to 8, **characterized in that** a hollow body (31) which is adapted precisely to the diameter and the length of the opening (30) is introduced axially from top (4) to bottom (5) and fixed inside the filling body, for example by strutting or gluing, and **in that** this hollow body (31) consists of a buoyant and incombustible foam material as a buoyancy means for the filling body and, if the intended use renders this necessary, is divided into chambers which are filled with different substances at the same time, for example, one part with fire-extinguishing gel and one part with buoyant foam.

15. The filling body according to claims 1 to 8, **characterized in that** a hollow body (31) which is adapted precisely to the diameter and the length of the opening (30) is introduced axially from top (4) to bottom (5) and fixed inside the filling body, for example, by strutting or gluing, and that this hollow body (31) consists of material which swells up strongly in case of heat.

16. The filling body according to claims 1 to 7 and 9 to 15, **characterized in that** the entire filling body is coated with a noble metal.

17. The filling body according to claims 1 to 7 and 9 to 15, **characterized in that** the entire filling body is provided with an antibacterial and/or antifungal outer functional coating, said coating being preferably produced by means of a SOL-GEL method.

18. A method for filling tank containers with liquid and gaseous fuels, **characterized in that** the filling bodies according to any one of claims 1 to 17 are introduced into the fuel tanks (24), or containers containing liquid or gaseous substances, via existing filling openings (26) by means of suitable blow-in devices (27), or drawn from these for maintenance purposes by means of suitable suction devices.

19. A method for protecting containers for flammable liquids or gases against explosion-type burning processes, **characterized in that** the container to be protected is filled completely with filling bodies according to any one of claims 1 to 17.

20. A method for extinguishing fires of flammable liquids, **characterized in that** the container for flammable liquids to be protected is filled completely with filling bodies according to claims 9 to 12, and that the wax layer of the hollow body (31) melts off in case of fire and releases the fire-retardant active substance present in the hollow body (31) to the burning environment.

21. A method for protecting containers for flammable liquids against corrosion, **characterized in that** the container to be protected is completely filled with filling bodies according to claim 12, and that the bichromate causes removal of water from fuels and their containers.

22. A method for protecting containers for flammable liquids against explosion-type combustion processes, **characterized in that** filling bodies according to claim 14 are applied free from gaps in one or several floating layers to the surface of flammable or explosive liquids in tank containers, and that this single or multi-layered barrier on the surface of the liquid acts as an ignition barrier between the liquid and the gas/air space in the tank container.

23. A method for extinguishing fires of flammable liquids, **characterized in that** filling bodies according to claim 14 are applied free from gaps in one or several floating layers to the surface of burning liquids in case of fire.

24. A method for creating an air-permeable flame and ignition barrier in dome shafts, cavities, rear-ventilated façades, air conditioners and pipes, **characterized in that** the dome shafts, cavities, rear-ventilated façades, air conditioners and pipes to be protected are filled completely, or in sections, with filling bodies according to any one of claims 1 to 13.

25. A method for creating an impermeable ignition and flame barrier in dome shafts, cavities, rear-ventilated façades, air conditioners and pipes, **characterized in that** the dome shafts, cavities, rear-ventilated façades, air conditioners and pipes to be protected are filled completely, or in sections, with filling bodies according to claim 15.

26. A method for creating a bacteria barrier in air conditioners, **characterized in that** filling bodies according to claims 15 to 17 are installed in the shafts of the air conditioner to be protected in such a manner that the air-conditioner shaft is filled completely or in sections.

27. A method for integrating an active or passive RFID (radio frequency identification) transponder into a filled or non-filled tank container, **characterized in that** one or several filling bodies according to claims 13 to 14 are introduced into the tank container, and that the data of the transponders integrated in these filling bodies can be received and read out from the outside, by means of mobile or stationary mounted reading devices without destroying or damaging the filled or non-filled container.

28. A method for reducing carbon-hydrogen emissions (so-called "greenhouse gases") which arise from evaporation, vaporization or volatilization of liquids or gases stored in movable tank containers of vehicles (land vehicles, watercraft, spacecraft and aircraft) or non-movable tank containers (storage tanks), **characterized in that** the movable or non-movable tank container is filled completely with filling bodies according to any one of claims 1 to 13 and 15 to 17.

29. A method for reducing carbon-hydrogen emissions (so-called "greenhouse gases") which arise from evaporation, vaporization or volatilization of liquids or liquid gases stored in movable tank containers of vehicles (land vehicles, watercraft, spacecraft and aircraft) or non-movable tank containers (storage tanks), **characterized in that** one or several layers of the floating filling bodies according to claims 14 to 17 are applied to the surface of the stored liquid.

30. A method for increasing stability and crash safety of containers containing flammable and explosive liquids and gases in case of mechanical impacts on the container walls from the outside, **characterized in that** the container to be protected is filled completely with filling bodies according to any one of claims 6 to 17, and that this filling provides for an appropriate counterpressure to the pressure acting on the exterior container walls from the outside.

31. A method for preventing implosions of tank containers, for example, mineral-oil tank cars, without forced ventilation systems, as well as of pipes and pressure tanks which are not designed to be vacuum-proof and whose safety valve fails, **characterized in that** the tank containers, pipes and pressure tanks to be protected are filled completely with filling bodies according to any one of claims 6 to 17, and that when a negative pressure is produced in the interior of the tank containers, pipes and pressure tanks to be protected when emptying the same, these filling bodies will counteract the external positive pressure of the atmosphere load acting on the container walls from the outside.

32. A method for enabling welding operations on filled or non-cleaned containers containing flammable and explosive liquids and gases without the risk of explosions or strong deflagrations, **characterized in that** the containers containing flammable and explosive liquids and gases are filled completely with the filling bodies according to any one of claims 6 to 17 before beginning the repair works.

33. A method for reducing the boil-off effect of hydrogen, **characterized in that** the entire hydrogen tank is filled with filling bodies according to any one of claims 6 to 17.

34. A method for optimizing applications in the chemical industry, for example, in vacuum and normal-pressure rectification, absorption, stripping, extraction, vapour condensation and regenerative heat exchange as well as in washing, biological conversion, condensation, etc., in which it is primarily important to have filling bodies providing large surfaces at low flow resistance, **characterized in that** filling bodies according to any one of claims 6 to 17 are used therefor, and that these filling bodies according to any one of claims 6 to 17 are installed, for example, in the form of loose packages, horizontally or vertically, in pipes or columns.

35. A method for preventing bacteria and fungi in tank containers, **characterized in that** the tank container is filled completely with filling bodies according to claims 16 to 17.

36. A method for reducing the surge effect of liquids and liquid gases in movable tank containers of aircraft, spacecraft, watercraft and land vehicles, **characterized in that** the respective tank is filled completely with filling bodies according to any one of claims 6 to 17.

37. A method for dissipating static electricity in movable and stationary tank containers containing fuels, chemical liquids and gases, **characterized in that** the tank container to be protected is filled completely with filling bodies according to any one of claims 6 to 17.

38. A method for protecting tank containers containing fuels, chemical liquids and gases against electromagnetic disturbances (EMDs), **characterized in that** the tank container to be protected is filled completely with filling bodies according to any one of claims 1 to 17.

39. A method for reducing, and delaying, the BLEVE (boiling liquid expanding vapour explosion) effect in tank containers containing liquefied flammable gases, **characterized in that** the tank container to be protected is filled completely with filling bodies according to any one of claims 1 to 17.

40. A method for increasing the filling capacity when filling gas containers at a predefined volume and pressure of the gas container, **characterized in that** the empty gas container is filled completely with filling bodies according to any one of claims 1 to 17.

41. A method for reducing liquid and gas-pressure peaks when filling tank containers with liquids and gases, **characterized in that** the entire tank container is filled completely with filling bodies according to any one of claims 1 to 17, and that these filling bodies split a gas or liquid jet into a plurality of partial jets when filling the container, thus causing a substantial reduction of pressure peaks inside the tank container and consequently a reduction of the pressure peaks acting on the interior walls of the containers.

42. A method for heating or cooling liquids and gases in tank containers or pipes, **characterized in that** the entire tank container or pipe is filled with filling bodies according to any one of claims 1 to 17, and that at least one filling body according to any one of claims 1 to 17 is in direct cooling or heating contact with a cooling or heating element, wherein this cooling or heating element is preferably provided outside the tank container or the pipe, respectively, and the cooling or heating contact is established by means of a rod-shaped or annular conductor penetrating the container or pipe wall.

43. A method for heating or cooling liquids and gases in tank containers or pipes, **characterized in that** the entire tank container or pipe is filled with filling bodies according to any one of claims 1 to 17, and that at least one filling body is heated by a heat source outside the tank container or pipe without penetration of the container or pipe wall, preferably by means of induction or a microwave field.

44. A method for reducing vaporization losses caused by vaporization of liquids stored in movable tank containers of vehicles (land vehicles, watercraft, spacecraft and aircraft) or non-movable tank containers (storage tanks), **characterized in that** the movable or non-movable tank container is filled completely with filling bodies according to any one of claims 1 to 17.

## Revendications

1. Corps de remplissage creux en forme de bille destiné de préférence à remplir des récipients et constitué de surfaces verticales (3) de type disque qui sont disposées concentriquement l'une par rapport à l'autre en formant un angle déterminé, **caractérisé en ce qu'**il est prévu trois ou plusieurs surfaces verticales (3) de type disque perpendiculairement auxquelles sont disposées deux ou plusieurs surfaces horizontales (7, 8, 10) de type disque s'étendant parallèlement l'une à l'autre.

2. Corps de remplissage selon la revendication 1, **caractérisé en ce que** au milieu de la surface horizontale (10) se trouve une ouverture circulaire (6) qui, conjointement avec un corps supérieur (4) ouvert vers l'intérieur à la manière d'un manchon et un corps inférieur (5) ouvert vers l'intérieur à la manière d'un manchon, forme axialement du haut (4) vers le bas (5) une ouverture (30) axialement tubulaire de bout en bout, le diamètre intérieur des corps (4, 5) de type manchon et de forme circulaire ouvert vers l'intérieur et le diamètre intérieur de l'ouverture circulaire (6) sont identiques.

3. Corps de remplissage selon la revendication 2, **caractérisé en ce que** les surfaces verticales (1) s'étendent de leur bord extérieur jusqu'au bord respectif des passages circulaires (4, 5, 6), des surfaces horizontales (7, 8, 10) s'étendant parallèlement et entourant les passages circulaires (4, 5, 6).

4. Corps de remplissage selon la revendication 3, **caractérisé en ce que** les surfaces verticales (2) s'étendent de leur bord extérieur jusqu'à la moitié de la distance entre le bord extérieur de la surface verticale (2) et le bord des passages circulaires (5, 6) des surfaces horizontales (8, 10) s'étendant en parallèle.

5. Corps de remplissage selon la revendication 4, **caractérisé en ce que** les surfaces verticales (3) forment respectivement en haut (4) et en bas (5) la liaison perpendiculaire entre les surfaces horizontales (7, 8) disposées en parallèle et les corps (4, 5) de type manchon.

6. Corps de remplissage selon les revendications 1 à 5, **caractérisé en ce que** sur les surfaces horizontales (7, 8) sont ménagées des ouvertures circulaires (9) qui sont disposées de telle sorte que respectivement sur la surface horizontale (8) une ouverture (9) est ménagée entre les surfaces verticales (1, 2) et respectivement sur la surface horizontale (7) une ouverture est ménagée entre les surfaces verticales (3).

7. Corps de remplissage selon les revendications 1 à 6, **caractérisé en ce que** toute la surface du corps de remplissage présente une conformation lisse ou poreuse.

8. Corps de remplissage selon les revendications 1 à 7, **caractérisé en ce que** tout le corps de remplissage est recouvert d'un bichromate alcalin.

9. Corps de remplissage selon les revendications 1 à 8, **caractérisé en ce qu'**un corps creux (31), précisément adapté au diamètre et à la longueur de l'ouverture (30), est introduit axialement du haut (4) vers le bas (5) et est fixé dans le corps de remplissage, par exemple par expansion ou collage, et le corps creux (31) est doté d'un remplissage ignifuge tel que du bicarbonate de sodium, du borate de zinc ou de sodium, du bromure de calcium, du chlorure de calcium dihydraté, du chlorure de calcium hexahydraté ou des oléates (sels et esters de l'acide oléique).

10. Corps de remplissage selon la revendication 9, **caractérisé en ce que** le remplissage du corps creux (31) est de préférence un gel extincteur ignifuge qui contient comme matière alcaline un polymère dans lequel de l'eau est liée.

11. Corps de remplissage selon les revendications 9 à 10, **caractérisé en ce que** l'enveloppe extérieure du corps creux (31) est constituée d'une mince couche de cire qui fond en cas d'incendie et libère le contenu.

12. Corps de remplissage selon la revendication 11, **caractérisé en ce que** le seuil de température de la couche de cire du corps creux (31) est adapté au domaine d'utilisation respectif du corps de remplissage.

13. Corps de remplissage selon les revendications 1 à 8, **caractérisé en ce qu'**un corps creux (31), précisément adapté au diamètre et à la longueur de l'ouverture (30), est introduit axialement du haut (4) vers le bas (5) et est fixé dans le corps de remplissage par exemple par expansion ou collage et une puce formant transpondeur RFID (identification radiofréquence) actif ou passif se trouve dans ce corps creux (31).

14. Corps de remplissage selon les revendications 1 à 8, **caractérisé en ce qu'**un corps creux (31), précisément adapté au diamètre et à la longueur de l'ouverture (30), est introduit axialement du haut (4) vers le bas (5) et est fixé dans le corps de remplissage par exemple par expansion ou collage et ce corps creux (31) est constitué d'une matière alvéolaire flottante et ininflammable servant de moyen de portance pour le corps de remplissage et, dans la mesure où cela est nécessaire à l'utilisation, ledit corps creux est subdivisé en chambres qui sont remplies en même temps de matières différentes, par exemple en partie avec du gel extincteur et en partie avec une matière alvéolaire flottante.

15. Corps de remplissage selon les revendications 1 à 8, **caractérisé en ce qu'**un corps creux (31), précisément adapté au diamètre et à la longueur de l'ouverture (30), est introduit axialement du haut (4) vers le bas (5) et est fixé dans le corps de remplissage par exemple par expansion ou collage et ce corps creux (31) est constitué d'une matière qui gonfle fortement à la chaleur.

16. Corps de remplissage selon les revendications 1 à 7 et 9 à 15, **caractérisé en ce que** tout le corps de remplissage est revêtu d'un métal noble.

17. Corps de remplissage selon les revendications 1 à 7 et 9 à 15, **caractérisé en ce que** tout le corps de remplissage est doté d'un revêtement extérieur fonctionnel antibactérien et/ou antifongique, ce revêtement étant réalisé avantageusement par un procédé SOL-GEL.

18. Procédé de remplissage de réservoirs avec des combustibles liquides et gazeux, **caractérisé en ce que** les corps de remplissage selon l'une des revendications 1 à 17 sont introduits, au moyen d'appareils d'injection appropriés (27), dans des réservoirs de combustibles (24) ou des récipients contenant des matières liquides et gazeuses par des ouvertures de remplissage existantes (26), ou sont retirés de ceux-ci par aspiration au moyen d'appareils d'aspiration appropriés pour des besoins de maintenance.

19. Procédé de protection de réservoirs pour liquides ou gaz inflammables contre des processus de combustion de type explosif, **caractérisé en ce que** le récipient à protéger est entièrement rempli de corps de remplissage selon l'une des revendications 1 à 17.

20. Procédé d'extinction d'incendies de liquides inflammables, **caractérisé en ce que** le récipient à protéger est entièrement rempli de corps de remplissage selon les revendications 9 à 12 et, en cas d'incendie, la couche de cire du corps creux (31) fond et libère dans l'environnement en flammes l'agent ignifuge se trouvant dans le corps creux (31).

21. Procédé de protection contre la corrosion de récipients pour liquides inflammables, **caractérisé en ce que** le récipient à protéger est entièrement rempli de corps de remplissage selon la revendication 12 et le bichromate agit de façon à éliminer l'eau de matières combustibles et de leurs récipients.

22. Procédé de protection de récipients pour liquides inflammables contre des processus de combustion de type explosif, **caractérisé en ce que** des corps de remplissage selon la revendication 14 sont placés sur la surface de liquides combustibles ou explosifs dans des réservoirs, sans ménager d'espaces entre eux et de façon à flotter en une ou plusieurs couches, et cette barrière monocouche ou multicouches à la surface du liquide sert de dispositif anti-allumage entre le liquide et l'espace contenant du gaz ou de l'air dans le réservoir.

23. Procédé d'extinction d'incendie de liquides inflammables, **caractérisé en ce que**, en cas d'incendie, des corps de remplissage selon la revendication 14 sont placés sur la surface d'un liquide inflammable sans ménager d'espaces entre eux et de façon à flotter en une ou plusieurs couches.

24. Procédé de réalisation d'un dispositif anti-flammes et anti-allumage perméable à l'air dans des trous d'homme, des espaces creux, des façades rétroventilées, des systèmes de climatisation et des tuyaux, **caractérisé en ce que** les trous d'homme, les espaces creux, les façades rétroventilées, les systèmes de climatisation et les tuyaux à protéger sont partiellement ou entièrement remplis de corps de remplissage selon l'une des revendications 1 à 13.

25. Procédé de réalisation d'un dispositif anti-flammes et anti-allumage imperméable dans des trous d'homme, des espaces creux, des façades rétroventilées, des systèmes de climatisation et des tuyaux, **caractérisé en ce que** les trous d'homme, les espaces creux, les façades rétroventilées, les systèmes de climatisation et les tuyaux à protéger sont partiellement ou entièrement remplis de corps de remplissage selon la revendication 15.

26. Procédé de réalisation d'une barrière antibactérienne dans des systèmes de climatisation, **caractérisé en ce que** des corps de remplissage selon les revendications 15 à 17 sont intégrés dans les cheminées du système de climatisation à protéger de sorte que la cheminée du système de climatisation est totalement ou partiellement remplie.

27. Procédé d'intégration d'un transpondeur RFID (Identification radiofréquence) actif ou passif dans un réservoir rempli ou non rempli, **caractérisé en ce qu'**un ou plusieurs corps de remplissage selon les revendications 13 à 14 sont introduits dans le réservoir et les données des transpondeurs intégrés dans ces corps de remplissage peuvent être reçues et lues de l'extérieur au moyen d'appareils de lecture mobiles ou fixes, sans détruire ou affecter le récipient rempli ou non rempli.

28. Procédé de réduction d'émissions d'hydrocarbures (appelés « gaz à effet de serre ») qui sont dues à l'évaporation, la vaporisation ou la volatilisation de liquides ou de gaz stockés dans des réservoirs mobiles d'engins (engins terrestres, marins, spatiaux et aériens) ou des réservoirs immobiles (réservoirs de stockage), **caractérisé en ce que** le réservoir mobile ou immobile est entièrement rempli de corps de remplissage selon l'une des revendications 1 à 13 et 15 à 17.

29. Procédé de réduction d'émissions d'hydrocarbures (appelés « gaz à effet de serre ») qui sont dues à l'évaporation, la vaporisation ou la volatilisation de liquides ou de gaz liquéfiés stockés dans des réservoirs mobiles d'engins (engins terrestres, marins, spatiaux et aériens) ou des réservoirs immobiles (réservoirs de stockage), **caractérisé en ce que** des corps de remplissage sont placés sur la surface du liquide stocké de façon à flotter en une ou plusieurs couches selon les revendications 14 à 17.

30. Procédé d'augmentation de la stabilité et de la protection anti-chocs de récipients contenant des liquides et des gaz inflammables et explosifs lorsque des actions mécaniques sont exercées sur les parois des récipients depuis l'extérieur, **caractérisé en ce que** le récipient à protéger est entièrement rempli de corps de remplissage selon l'une des revendications 6 à 17 et ce remplissage oppose une contre-pression correspondante à la pression agissant depuis l'extérieur sur les parois extérieures du récipient.

31. Procédé pour empêcher des implosions de réservoirs, par exemple de citernes de transport de pétrole, sans systèmes de ventilation forcée, ainsi que de tuyaux et de récipients sous pression qui ne résistent pas à une dépression et dont le clapet de sécurité ne fonctionne plus, **caractérisé en ce que** les réservoirs, tuyaux et récipients sous pression à protéger sont entièrement remplis de corps de remplissage selon l'une des revendications 6 à 17 et, dans le cas où une dépression est générée à l'intérieur des réservoirs, tuyaux et récipients sous pression à protéger lorsqu'ils sont vidés, ces corps de remplissage s'opposent à la surpression de l'atmosphère écrasante agissant dans un tel cas depuis l'extérieur sur les parois de récipient.

32. Procédé destiné à permettre des travaux de soudage sur des récipients remplis ou non nettoyés contenant des liquides ou des gaz inflammables et explosifs sans le risque d'explosion ou de fortes déflagrations, **caractérisé en ce que** les récipients contenant des liquides ou des gaz inflammables et explosifs sont entièrement remplis de corps de remplissage selon l'une des revendications 6 à 17 avant de commencer les travaux de réparation.

33. Procédé pour réduire « l'effet de Boil-off » de l'hydrogène, **caractérisé en ce que** le réservoir d'hydrogène est entièrement rempli de corps de remplissage selon l'une des revendications 6 à 17.

34. Procédé d'optimisation d'applications dans l'industrie chimique, comme par exemple lors de la rectification sous vide et à pression normale, lors de l'absorption, du stripage, de l'extraction, de la condensation de buée et de l'échange thermique régénératif, ainsi que lors du lavage, de la transformation biologique, de la condensation etc., lors desquels il est surtout important d'avoir des corps de remplissage de grandes surfaces et de faible résistance à l'écoulement, **caractérisé en ce que** l'on utilise pour cela des corps de remplissage selon l'une des revendications 6 à 17 et ces corps de remplissage selon l'une des revendications 6 à 17 sont incorporés verticalement ou horizontalement, par exemple sous la forme de conditionnements en vrac, dans des tuyaux ou colonnes.

35. Procédé pour empêcher l'installation de bactéries et de champignons dans des réservoirs, **caractérisé en ce que** le réservoir est entièrement rempli de corps de remplissage selon les revendications 16 à 17.

36. Procédé pour réduire l'effet de projection de liquides et de gaz liquéfiés dans des réservoirs mobiles d'engins aériens, spatiaux, marins et terrestres, **caractérisé en ce que** les réservoirs respectifs sont entièrement remplis de corps de remplissage selon l'une des revendications 6 à 17.

37. Procédé de dérivation de l'électricité statique dans des réservoirs mobiles et immobiles contenant des combustibles, des produits chimiques liquides et gazeux, **caractérisé en ce que** le réservoir à protéger est entièrement rempli de corps de remplissage selon l'une des revendications 6 à 17.

38. Procédé de protection de réservoirs contenant des combustibles, des produits chimiques liquides et gazeux contre des perturbations électromagnétiques EMD (Electromagnetic Disturbances), **caractérisé en ce que** le réservoir à protéger est entièrement rempli de corps de remplissage selon l'une des revendications 1 à 17.

39. Procédé pour réduire et retarder l'effet BLEVE (Boiling Liquid Expanding Vapour Explosion) dans des réservoirs contenant des gaz liquéfiés inflammables, **caractérisé en ce que** le réservoir à protéger est entièrement rempli de corps de remplissage selon l'une des revendications 1 à 17.

40. Procédé pour augmenter la quantité de remplissage lors du remplissage de récipients de gaz pour un volume et une pression prescrits du récipient de gaz, **caractérisé en ce que** le récipient vide de gaz est entièrement rempli de corps de remplissage selon l'une des revendications 1 à 17.

41. Procédé pour réduire les pointes de pression de liquides et de gaz lors du remplissage de réservoirs contenant des liquides et des gaz, **caractérisé en ce que** tout le réservoir est entièrement rempli de corps de remplissage selon l'une des revendications 1 à 17 et ces corps de remplissage divisent un jet de gaz ou de liquide lors du remplissage du récipient en un grand nombre de jets partiels de sorte que l'on obtient une réduction importante de pointes de pression à l'intérieur du réservoir et donc une réduction des pointes de pression sur les parois intérieures du récipient.

42. Procédé de chauffage ou de refroidissement de liquides et de gaz dans des réservoirs ou des tuyaux, **caractérisé en ce que** le réservoir ou le tuyau est entièrement rempli de corps de remplissage selon l'une des revendications 1 à 17 et au moins un des corps de remplissage selon l'une des revendications 1 à 17 est en contact réfrigérant ou calorifique direct avec un élément réfrigérant ou calorifique, cet élément réfrigérant ou calorifique étant de préférence à l'extérieur du réservoir ou du tuyau et le contact réfrigérant ou calorifique est réalisé par un conducteur en forme de barre ou d'anneau traversant la paroi de récipient ou de tuyau.

43. Procédé de chauffage ou de refroidissement de liquides et de gaz dans des réservoirs ou des tuyaux, **caractérisé en ce que** le réservoir ou le tuyau est entièrement rempli de corps de remplissage selon l'une des revendications 1 à 17 et au moins un des corps de remplissage est chauffé par une source de chaleur se trouvant à l'extérieur du réservoir ou du tuyau, sans traverser la paroi du récipient ou du tuyau, avantageusement par induction ou au moyen d'un champ micro-ondes.

44. Procédé de réduction de pertes par volatilisation dues à la volatilisation de liquides stockés dans des réservoirs mobiles d'engins (engins terrestres, marins, spatiaux et aériens) ou dans des réservoirs immobiles (réservoirs de stockage), **caractérisé en ce que** le réservoir mobile ou immobile est entièrement rempli de corps de remplissage selon l'une des revendications 1 à 17.
